# EUROPEAN PATENT SPECIFICATION

(11) **EP 4 274 269 B1**
(45) Date of publication and mention of the grant of the patent: **28.01.2026**
(21) Application number: 21935671.4
(22) Date of filing: 17.05.2021
(51) Int. Cl.: H04W 4/06, H04W 12/069, H04W 4/50, H04W 76/40, H04W 84/12

(54) **WIRELESS COMMUNICATION METHOD AND DEVICE**
VERFAHREN UND VORRICHTUNG ZUR DRAHTLOSEN KOMMUNIKATION
PROCÉDÉ DE COMMUNICATION SANS FIL ET DISPOSITIF

(30) Priority: 09.04.2021 CN 202110385389; 21.04.2021 WO PCT/CN2021/088708
(43) Date of publication of application: 08.11.2023
(73) Proprietor: Guangdong OPPO Mobile Telecommunications Corp., Ltd., Wusha, Chang'an Dongguan Guangdong 523860 (CN)
(72) Inventor: RAN, Xinyi, Dongguan, Guangdong 523860 (CN); TIAN, Yingying, Dongguan, Guangdong 523860 (CN); JU, Honghao, Dongguan, Guangdong 523860 (CN); ZHOU, Pei, Dongguan, Guangdong 523860 (CN); HUANG, Lei, Singapore 049483 (SG); LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2021/094229
(87) International publication number: WO 2022/213450

(56) References cited:
- US-A1- 2017 006 523
- US-A1- 2020 389 869
- MARC EMMELMANN: "TGbc_TGbcD1_05.rtf", vol. 802.11 - Editorial, 9 December 2020 (2020-12-09), pages 1, XP068256478, Retrieved from the Internet <URL:https://ieee-sa.imeetcentral.com/p/aQAAAAAE1FyW> [retrieved on 20230802]
- PEI ZHOU (OPPO): "Discussion on Enhanced Broadcast Request ANQP-element", vol. 802.11bc, 12 May 2021 (2021-05-12), pages 1 - 8, XP068181635, Retrieved from the Internet <URL:https://mentor.ieee.org/802.11/dcn/21/11-21-0599-00-00bc-discussion-on-enhanced-broadcast-request-anqp-element.pptx> [retrieved on 20210512]
- MARC EMMELMANN: "Draft P802.11bc_D1.0.pdf", vol. 802.11 - Editorial, 23 November 2020 (2020-11-23), pages 1, XP068243714, Retrieved from the Internet <URL:https://ieee-sa.imeetcentral.com/p/aQAAAAAEU6re> [retrieved on 20230725]
- JAMES LEPP (BLACKBERRY): "Air Time Consumption Control", IEEE DRAFT; 11-19-0377-00-00BC-AIR-TIME-CONSUMPTION-CONTROL, IEEE-SA MENTOR, PISCATAWAY, NJ USA, vol. 802.11bc, no. 0, 12 March 2019 (2019-03-12), Piscataway, NJ USA , pages 1 - 6, XP068148161
- JAMES LEPP (BLACKBERRY): "What is a broadcast service", IEEE DRAFT; 11-19-0128-00-00BC-WHAT-IS-A-BROADCAST-SERVICE, IEEE-SA MENTOR, PISCATAWAY, NJ USA, vol. 802.11bc, no. 0, 14 January 2019 (2019-01-14), Piscataway, NJ USA , pages 1 - 7, XP068147734
- BT GROUP: "TR 33.865 WLAN Proposal for clause 6 Framework for Analysis of Solutions", 3GPP DRAFT; TR 33.865 WLAN PROPOSAL FOR CLAUSE 6 FRAMEWORK FOR ANALYSIS OF SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. San Francisco; 20131111 - 20131115, 12 November 2013 (2013-11-12), Mobile Competence Centre ; 650, route des Lucioles ; F-06921 Sophia-Antipolis Cedex ; France , XP050745133

## Description

### TECHNICAL FIELD

Embodiments of the present disclosure relate to the field of communication, and in particular to a wireless communication method and devices.

### BACKGROUND

In standard 802.11bc, a Station (STA) can rapidly discover (i.e. rapidly obtain) an Enhanced Broadcast Service (eBCS) through an Access Network Query Protocol (ANQP) request and an ANQP response, or through an eBCS request and an eBCS response. However, at present, there is no authentication information of the eBCS in the enhanced broadcast response ANQP-element structure in the ANQP response. Likewise, at present, there is no authentication information of the eBCS in the eBCS response element structure in the eBCS response. Therefore, the STA cannot obtain the authentication information of the eBCS through the ANQP request and the ANQP response, or through the eBCS request and the eBCS response, but has to receive eBCS info frame before obtaining the authentication information of the eBCS.

However, transmission period of the eBCS info frame is large, and transmission interval is Target Beacon Transmission Time (TBTTs). At this time, for eBCS authenticated by Public Key Frame Authentication (PKFA), waiting for the authentication information provided by the eBCS info frame would increase authentication delay of PKFA MAC Protocol Data Unit (MPDU), which cannot satisfy authentication requirement of PKFA for delay-sensitive data. For Hash Chain Frame Authentication (HCFA) without instant authentication, waiting for the authentication information provided by the eBCS info frame would increase the authentication delay of HCFA MPDU, which cannot satisfy the goal of HCFA without instant authentication for continuous content distribution (e.g., real-time streaming transmission or periodic file transmission). For HCFA with the instant authentication, the STA would discard the received HCFA MPDU due to the large delay in the process of waiting for the eBCS info frame, which results in data waste. In a word, there are the problems of the large data authentication delay in the eBCS acquisition process and data loss caused by the eBCS authentication delay in the related art. Related technology can be found at least in non-patent documents "Air Time Consumption Control" IEEE Draft; XP068148161, MARC EMMELMANN: "Draft P802.11bc_D1.0.pdf"; XP068243714 and in patent document US2017/006523A1.

### SUMMARY

Embodiments of the present disclosure provide a wireless communication method and devices, thereby reducing the data authentication delay in the eBCS acquisition process and solving the problem of data loss caused by the eBCS authentication delay.

The present invention is set out in the appended set of claims.

To sum up, in the present disclosure, the enhanced broadcast response ANQP-element structure is modified, or the enhanced broadcast request ANQP-element structure and the enhanced broadcast response ANQP-element structure are modified, or the eBCS response element structure is modified, or the eBCS request element structure and the eBCS response element structure are modified, thereby reducing the data authentication delay in the eBCS acquisition process and mitigating the problem of data loss caused by the eBCS authentication delay. In the present disclosure, the enhanced broadcast request

In a fifth aspect, a wireless communication method is provided. The method includes the following operations. A STA sends a request frame carrying an eBCS request element to an AP. The STA receives a response frame carrying an eBCS response element. The eBCS request element is a unified request element for an eBCS that needs registration and does not need association and an eBCS that needs association, and the eBCS response element is a unified response element for the eBCS that needs registration and does not need association and the eBCS that needs association.

In a sixth aspect, a wireless communication method is provided. The method includes the following operations. An AP receives a request frame carrying an eBCS request element sent by a STA. The AP sends a response frame carrying an eBCS response element to the STA. The eBCS request element is a unified request element for an eBCS that needs registration and does not need association and an eBCS that needs association, and the eBCS response element is a unified response element for the eBCS that needs registration and does not need association and the eBCS that needs association.

In a seventh aspect, a STA is provided. The STA is configured to perform the method in the above first aspect or various implementations thereof.

In particular, the STA includes function modules for performing the method in the above first aspect or various implementations thereof.

In an eighth aspect, a sending end is provided. The sending end is configured to perform the method in the above second aspect or various implementations thereof.

In particular, the sending end includes function modules for performing the method in the above second aspect or various implementations thereof.

In a ninth aspect, an AP is provided. The AP is configured to perform the method in the above third aspect or various implementations thereof.

In particular, the AP includes function modules for performing the method in the above third aspect or various implementations thereof.

In a tenth aspect, a receiving end is provided. The receiving end is configured to performing the method in the above fourth aspect or various implementations thereof.

In particular, the receiving end includes function modules for performing the method in the above fourth aspect or various implementations thereof.

In an eleventh aspect, a STA is provided. The STA is configured to perform the method in the above fifth aspect or various implementations thereof.

In particular, the STA includes function modules for performing the method in the above fifth aspect or various implementations thereof.

In a twelfth aspect, an AP is provided. The AP is configured to perform the method in the above sixth aspect or various implementations thereof.

In particular, the AP includes function modules for performing the method in the above sixth aspect or various implementations thereof.

In a thirteenth aspect, a communication device is provided. The communication device includes a processor and a memory. The memory is configured to store a computer program, and the processor is configured to invoke and run the computer program stored in the memory to perform the method in any of the above first to sixth aspects or various implementations thereof.

In a fourteenth aspect, an apparatus is provided. The apparatus is configured to implement the method in any of the above first to sixth aspects or various implementations thereof.

In particular, the apparatus includes a processor. The processor is configured to invoke and run a computer program from a memory to cause a device on which the apparatus is mounted to perform the method in any of the above first to sixth aspects or various implementations thereof.

In a fifteenth aspect, a computer-readable storage medium is provided. The computer-readable storage medium is configured to store a computer program that causes a computer to perform the method in any of the above first to sixth aspects or implementations thereof.

In a sixteenth aspect, there is provided a computer program product comprising computer program instructions that cause a computer to perform the method in any of the first to sixth aspects or various implementations thereof.

In a seventeenth aspect, a computer program is provided. When the computer program is run on a computer, a computer performs the method in any of the above first to sixth aspects or various implementations thereof.

To sum up, in the present disclosure, the enhanced broadcast response ANQP-element structure is modified, or the enhanced broadcast request ANQP-element structure and the enhanced broadcast response ANQP-element structure are modified, or the eBCS response element structure is modified, or the eBCS request element structure and the eBCS response element structure are modified, thereby reducing the data authentication delay in the eBCS acquisition process and mitigating the problem of data loss caused by the eBCS authentication delay. In the present disclosure, the enhanced broadcast request ANQP-element structure is modified so as to support the termination notice process for an eBCS that only needs registration. In the present disclosure, a unified eBCS request element and a unified eBCS response element are provided to perform the request and acquisition of the eBCS. The unified eBCS request element is valid for both the associated eBCS and the non-associated eBCS, and the unified eBCS response element is also valid for both the associated eBCS and the non-associated eBCS.

### BRIEF DESCRIPTION OF THE DRAWINGS

FIG. 1 is a diagram of an eBCS downlink (DL) process.
FIG. 2 is a diagram of an enhanced broadcast response ANQP-element structure in an ANQP response.
FIG. 3 is a diagram of an eBCS response element structure in an eBCS response.
FIG. 4 is a diagram of an eBCS info frame structure.
FIG. 5 is a timing diagram of a rapid discovery of an eBCS adopting a PKFA authentication method.
FIG. 6 is a timing diagram of a rapid discovery of a service adopting a HCFA authentication method.
FIG. 7 is a flow chart of negotiation of a termination notice process.
FIG. 8 is a diagram of a structure of an eBCS termination notice frame.
FIG. 9 is a diagram of an eBCS request element structure.
FIG. 10 is a diagram of an eBCS response element structure.
FIG. 11 is a diagram of an enhanced broadcast request ANQP-element structure.
FIG. 12 is a diagram of an enhanced broadcast services ANQP-element structure.
FIG. 13 is a timing diagram of negotiation of a termination notice process of an eBCS that needs registration and associated.
FIG. 14 is an interaction flow chart of a wireless communication method provided by an embodiment of the present disclosure.
FIG. 15 is a diagram of an enhanced broadcast request ANQP-element structure provided by an embodiment of the present disclosure.
FIG. 16 is a diagram of another enhanced broadcast request ANQP-element structure provided by an embodiment of the present disclosure.
FIG. 17 is a diagram of yet another enhanced broadcast request ANQP-element structure provided by an embodiment of the present disclosure.
FIG. 18 is a diagram of an enhanced broadcast response ANQP-element structure provided by an embodiment of the present disclosure.
FIG. 19 is a diagram of another enhanced broadcast response ANQP-element structure provided by an embodiment of the present disclosure.
FIG. 20 is a diagram of an eBCS request element structure provided by an embodiment of the present disclosure.
FIG. 21 is a diagram of an eBCS response element structure provided by an embodiment of the present disclosure.
FIG. 22 is a diagram of another eBCS response element structure provided by an embodiment of the present disclosure.
FIG. 23 is a timing diagram of a rapid acquisition of an eBCS in a PKFA method provided by an embodiment of the present disclosure.
FIG. 24 is a timing diagram of a rapid acquisition of an eBCS in the HCFA method provided by an embodiment of the present disclosure.
FIG. 25 is an interaction flow chart of another wireless communication method provided by an embodiment of the present disclosure.
FIG. 26 is a diagram of an enhanced broadcast request ANQP-element structure provided by an embodiment of the present disclosure.
FIG. 27 is a diagram of another enhanced broadcast request ANQP-element structure provided by an embodiment of the present disclosure.
FIG. 28 is a diagram of yet another enhanced broadcast request ANQP-element structure provided by an embodiment of the present disclosure.
FIG. 29 is a timing diagram of negotiation of a termination notice process of an eBCS that only needs registration provided by an embodiment of the present disclosure.
FIG. 30 illustrates a block diagram of a STA 3000 according to an embodiment of the present disclosure.
FIG. 31 illustrates a block diagram of a sending end 3100 according to an embodiment of the present disclosure.
FIG. 32 illustrates a block diagram of an AP 3200 according to an embodiment of the present disclosure.
FIG. 33 illustrates a block diagram of a receiving end 3300 according to an embodiment of the present disclosure.
FIG. 34 is a diagram of a structure of a communication device 3400 provided by an embodiment of the present disclosure.
FIG. 35 is a diagram of a structure of a device according to an embodiment of the present disclosure.
FIG. 36 is an interaction flow chart of another wireless communication method provided by an embodiment of the present disclosure.
FIG. 37 is a diagram of a unified eBCS request element.
FIG. 38 is a diagram of a unified eBCS response element.
FIG. 39 illustrates a block diagram of a STA 3900 according to an embodiment of the present disclosure.
FIG. 40 illustrates a block diagram of an AP 4000 according to an embodiment of the present disclosure.

### DETAILED DESCRIPTION

Technical solutions of the embodiments of the present disclosure would be described below in conjunction with the drawings in the embodiments of the present disclosure. It would be obvious that the described embodiments are part of the embodiments of the present disclosure, but not all of them. With respect to the embodiments in the present disclosure, all other embodiments obtained by those of ordinary skill in the art without creative efforts fall within the scope of protection of the present disclosure.

Before introducing the technical solutions of the present disclosure, the relevant knowledge of the present disclosure would be described below.

IEEE 802.11bc provides an Enhanced Broadcast Service DownLink (eBCS DL), so as to enable an Access Point (AP) to broadcast data to a Station (STA).

It should be understood that the AP in the present disclosure may also be referred to as an eBCS AP, and the STA may also be referred to as an eBCS non-AP STA, which are not limited in the present disclosure.

In an eBCS DL process, the AP periodically broadcasts the eBCS info frame to realize the discovery of the eBCS DL service and provide authentication information of the eBCS (that is, the eBCS data). The present solution mainly improves a rapid acquisition service of the eBCS in the eBCS DL process, and perfects a negotiation process of a termination notice process.

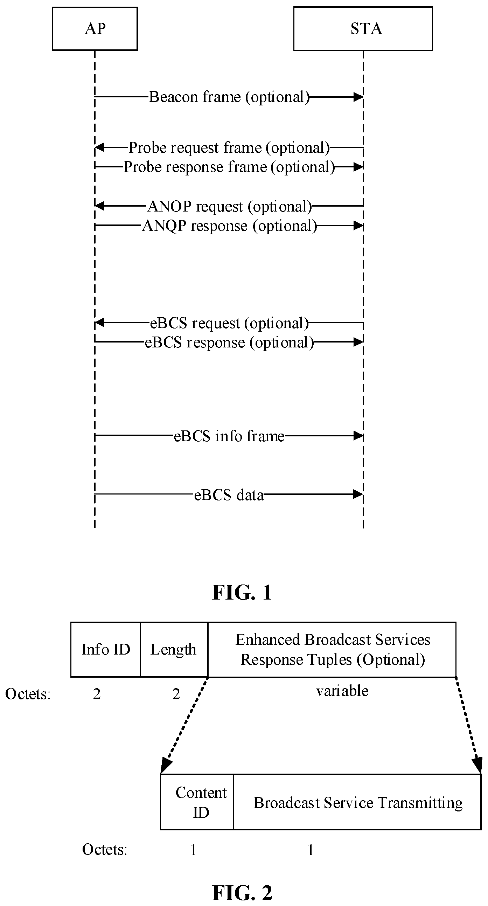

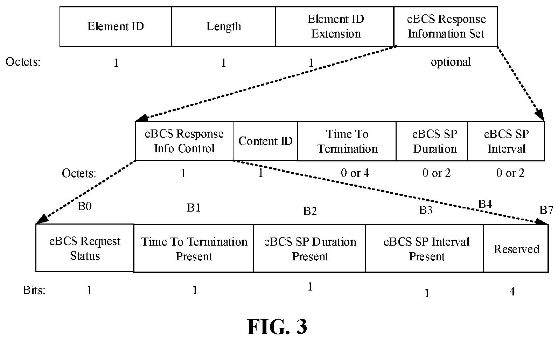

FIG. 1 provides a diagram of the eBCS DL process. As illustrated in FIG. 1, the specific processes are illustrated as follows.
(1) In a scanning phase, the AP sends a beacon frame or a probe response frame. The beacon frame or the probe response frame carries a field about a next eBCS info frame to inform the STA of a broadcast time of the next eBCS info frame.
(2) After receiving the eBCS info frame at a specified time, the STA obtains a sending time and authentication information of an eBCS data frame. Therefore, the STA receives the eBCS data frame broadcast by the AP at a specified time so as to obtain the eBCS.
   It should be understood that the eBCS data frame in the present disclosure may also be referred to as the eBCS or the eBCS data, which would not be limited in the present disclosure.
(3) In addition to the above-mentioned passive acquisition of the eBCS by the STA, the eBCS DL process also supports that the STA sends an ANQP request or an eBCS request to actively request one or more eBCSs, so as to achieve a rapid discovery of the eBCS. For an eBCS that needs registration but does not need association, the STA achieves the rapid discovery of the eBCS through an ANQP request frame and an ANQP response frame, so as to obtain the sending time of the eBCS. For the eBCS that needs association, the STA achieves the rapid discovery of the eBCS through the eBCS request frame and the eBCS response frame, so as to obtain the sending time of the eBCS data. FIG. 2 is a diagram of an enhanced broadcast response ANQP-element structure in an ANQP response, and FIG. 3 is a diagram of an eBCS response element structure in an eBCS response. As illustrated in FIG. 2 and FIG.3, neither the enhanced broadcast response ANQP-element structure nor the eBCS response element structure contains authentication information of the eBCS data.
(4) Therefore, after obtaining the eBCS data frame, the STA has to receive eBCS info frame before obtaining the authentication information of the eBCS data frame.

Furthermore, after the STA receives the eBCS data frame, for different eBCS data authentication methods, different data authentication processes are adopted, which are specifically divided into the following three methods.
a) In case of PKFA authentication, the STA needs to receive the eBCS info frame. Then, the certificate of the AP is buffered from the eBCS info frame to authenticate the eBCS data. In this case, the eBCS data may also be referred to as a PKFA MPDU. The PKFA is mainly configured for transmission of occasional small data or time-sensitive data.
b) In case of HCFA without the instant authentication, the STA needs to receive the eBCS info frame. An eBCS info interval, a HCFA base key, HCFA key change interval information, and information such as HCFA base key disclosed in subsequent eBCS data are extracted from the eBCS info frame to authenticate the eBCS data. In this case, the eBCS data may also be referred to as a HCFA MPDU.
c) In case of HCFA with the instant authentication, the STA needs to receive the eBCS info frame. A number of instant authenticators, an instant authenticator Hash distance and instant authenticator information are extracted from the eBCS info frame to authenticate the eBCS data. In this case, the eBCS data may also be referred to as a HCFA MPDU. It should be noted that for the eBCS data authenticated by the HCFA, before receiving the eBCS info frame, STA would discard the received eBCS data due to not receiving the authentication information for the eBCS data.

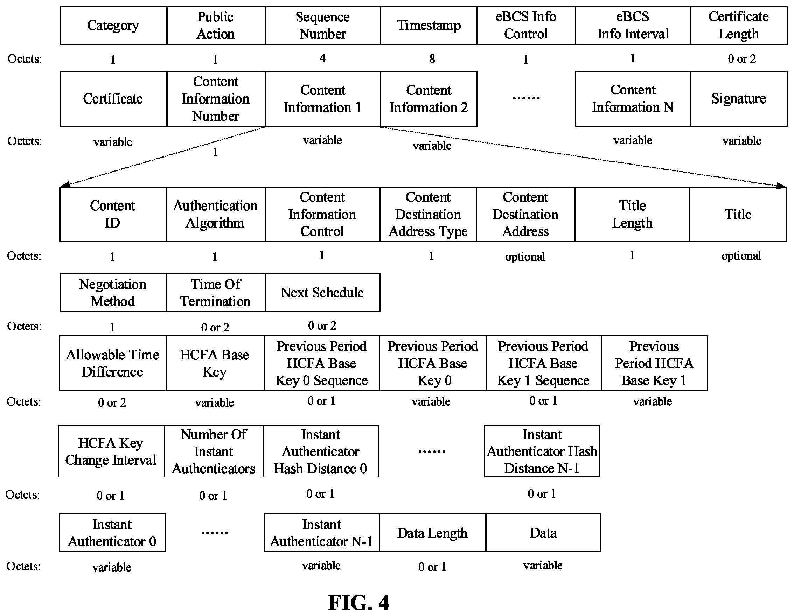

FIG. 4 is a diagram of an eBCS info frame structure. As illustrated in FIG. 4, the eBCS info frame contains important information about the eBCS, which mainly includes time dimension information and authentication dimension information. The time dimension information includes the eBCS info interval and a next time for the transmission of the data frame (next schedule) corresponding to the eBCS identified by each content Identity (ID). The authentication dimension information includes the authentication certificate, the HCFA base key, the HCFA key change interval information and the like.

Under the existing standard 802.11bc, the rapid discovery process of the eBCS for different authentication methods is as follows.

The rapid discovery process of the eBCS adopting the PKFA authentication method.

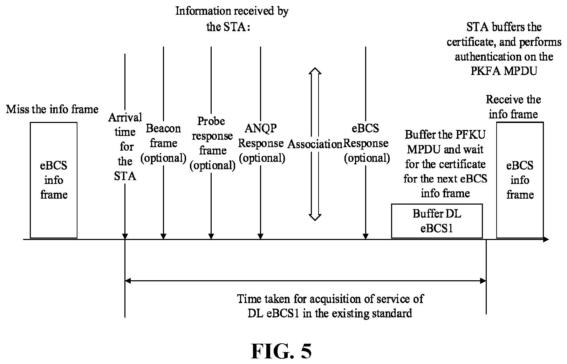

FIG. 5 is a timing diagram of a rapid discovery of an eBCS adopting the PKFA authentication method. As illustrated in FIG. 5, the STA joins existing communication network at the time point illustrated in FIG. 5. Transmission period of the eBCS info frame is large, and the transmission interval is TBTTs. Assuming that the STA at this time misses the first eBCS info frame in the figure, the STA cannot obtain the information about the PKFA authentication in the eBCS info frame. For the eBCS that needs registration but does not need association, the STA achieves the rapid discovery of the eBCS through the ANQP request/ANQP response frame, so as to obtain the sending time of the PKFA MPDU. For the eBCS that needs association, the STA achieves the rapid discovery of the eBCS through the eBCS request frame and the eBCS response frame after completing the association, so as to obtain the sending time of the PKFA MPDU. The specific processes are as follows.
(1) The STA receives a beacon frame or a probe response frame, and notifies the STA of the broadcast time of the next eBCS info frame through a next eBCS info frame field in the frame.
(2) The STA achieves the rapid discovery of the eBCS through the ANQP request frame and the ANQP response frame, or through the eBCS request frame and the eBCS response frame, so as to obtain the sending time of the PKFA MPDU. However, there is no authentication information of the PKFA MPDU in the ANQP response or the eBCS response. Therefore, even though the STA can receive the PKFA MPDU, it cannot perform authentication for the PKFA MPDU. Assuming that the certificate of the second eBCS info frame is within a limited period, the STA buffers the PKFA MPDU and waits for arrival of the second eBCS info frame.
(3) When the STA receives the second eBCS info frame, the STA obtains the sending time and the authentication information of the PKFA MPDU, buffers the authentication information, and performs authentication on the PKFA MPDU by using the buffered authentication information. After the authentication is successful, the eBCS is obtained.

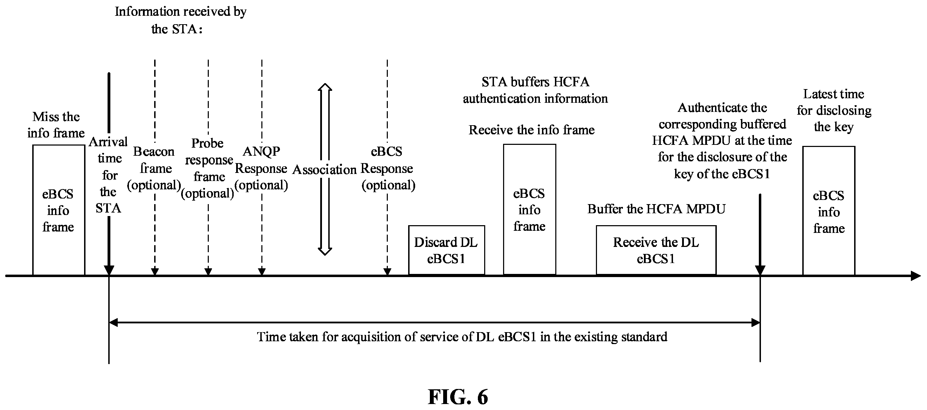

FIG. 6 is a timing diagram of a rapid discovery of a service adopting the HCFA authentication method. When the STA joins the existing communication network at the time point illustrated in FIG. 6, the transmission period of eBCS info frame is large, and the transmission interval is the TBTTs. Assuming that the STA at this time misses the first eBCS info frame, the STA cannot obtain the information about the HCFA authentication in the eBCS info frame. For the eBCS that needs registration but does not need association, the STA achieves the rapid discovery of the eBCS through the ANQP request frame and the ANQP response frame, so as to obtain the sending time of the HCFA MPDU. For the eBCS that needs association, the STA achieves the rapid discovery of the eBCS through the eBCS request frame and the eBCS response frame after completing the association, so as to obtain the sending time of the HCFA MPDU. The specific processes are as follows.
(1) The STA receives a beacon frame or a probe response frame, and notifies the STA of the broadcast time of the next eBCS info frame through a next eBCS info frame field in the frame.
(2) The STA achieves the rapid discovery of the eBCS through the ANQP request and the ANQP response, or through the eBCS request and the eBCS response, so as to obtain the sending time of the HCFA MPDU. However, there is no HCFA authentication information in the ANQP response or the eBCS response. Therefore, even though the STA can receive the HCFA MPDU, it cannot perform authentication for the HCFA MPDU. Therefore, before receiving the eBCS info frame, the STA discards the HCFA MPDU and waits for arrival of the second eBCS info frame.
(3) When the STA receives the second eBCS info frame, the STA obtains the time information and the authentication information of the HCFA MPDU. According to a next time for transmission of the data frame (next schedule) indicated in the eBCS info frame, the STA waits for arrival of HCFA MPDU at the corresponding time point.
(4) When the STA receives the HCFA MPDU, since the key for authenticating the HCFA MPDU is not disclosed, the STA buffers the HCFA MPDU and waits for the disclosure of the key corresponding to the HCFA MPDU. HCFA algorithm is an algorithm with the key being delayed in disclosure. The delay of an assumed time for the disclosure of the key relative to the HCFA MPDU reception time is illustrated in FIG 6. After the public key is obtained at the assumed time point, the STA authenticates the previously buffered HCFA MPDU according to a time scale. The latest time point for disclosing the key with delay is when the third eBCS info frame is received, because key information is contained in the field of this eBCS info frame at this time. After the authentication is successful, the eBCS is obtained.

Technical solution for negotiation of termination notice process.

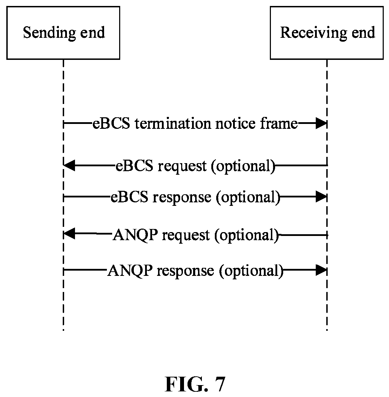

Referring to the termination notice process described in the 802.11bc, when the sending end is about to terminate a certain eBCS, the specific negotiation process is illustrated in FIG. 7.

It should be understood that the sending end is a device for broadcasting data. The sending end may be an STA, and correspondingly, the receiving end may be an AP. Alternatively, the sending end may be an AP, and correspondingly, the receiving end may be an STA, which would not be limited in the present disclosure.

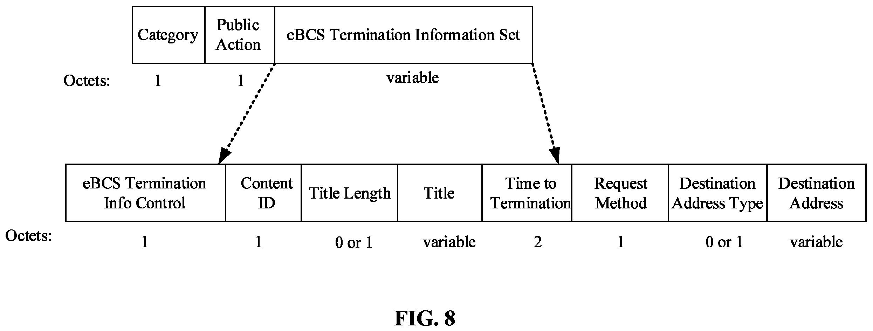

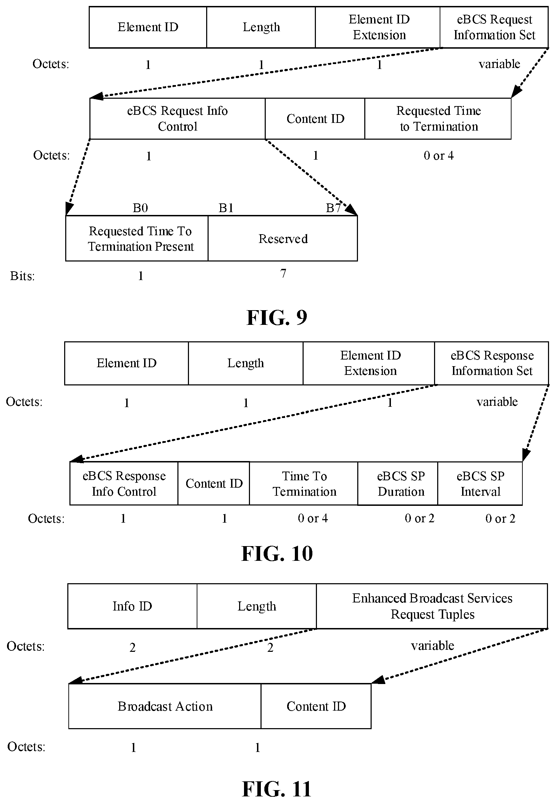

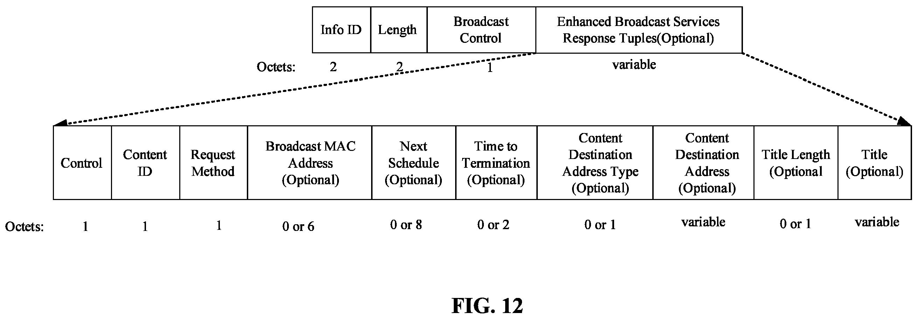

FIG. 7 is a flow chart of the negotiation of the termination notice process, and the specific operations are illustrated in FIG. 7.
(1) When a certain eBCS is about to be terminated within a time interval less than or equal to an eBCS termination notice time stipulated in the protocol, the sending end would send an eBCS termination notice frame to inform the receiving end of the expected time to termination of the eBCS. In addition, the eBCS termination notice frame not only indicates the time to termination of the eBCS that corresponds to the specific content ID of the eBCS, but also indicates extension information for extension of the eBCS, which may include a service destination address and a service extension request method. FIG. 8 is a diagram of a structure of the eBCS termination notice frame
(2) If the expected time to termination of the eBCS indicated in the eBCS termination notice frame is acceptable to the receiving end, the eBCS would be terminated strictly according to the expected time to termination. The acceptable time to termination for the receiving end is not stipulated in the standard 802.11bc. If the expected time to termination of the eBCS indicated in the eBCS termination notice frame is earlier than an actual expected time to termination of the receiving end, the receiving end would request the extension of the eBCS according to the eBCS extension information indicated in the received eBCS termination notice frame. The eBCS extension request method may adopt the eBCS request or the ANQP request.
(3) For the eBCS that needs registration and association, the receiving end sends the eBCS request carrying a requested time to termination, so that after a successful request for eBCS extension, a time to termination would be carried in the eBCS response, so that the sending end can reply to the receiving end with a new time to termination of the eBCS, as illustrated in FIG. 9 and FIG. 10.
(4) For an eBCS that only needs registration and does not need association, the receiving end sends an ANQP request containing an enhanced broadcast request ANQP-element structure. After a successful request for eBCS extension, the time to termination would be carried in an enhanced broadcast services ANQP-element structure contained in the ANQP response, so that the sending end can reply to the receiving end with a new time to termination of the eBCS, as illustrated in FIG. 11 and FIG. 12. However, in FIG. 11, there is no field related to the time to termination in the enhanced broadcast request ANQP-element structure. Therefore, the request and negotiation of the new time to termination of the eBCS cannot be performed, and the extension of the eBCS cannot be achieved.

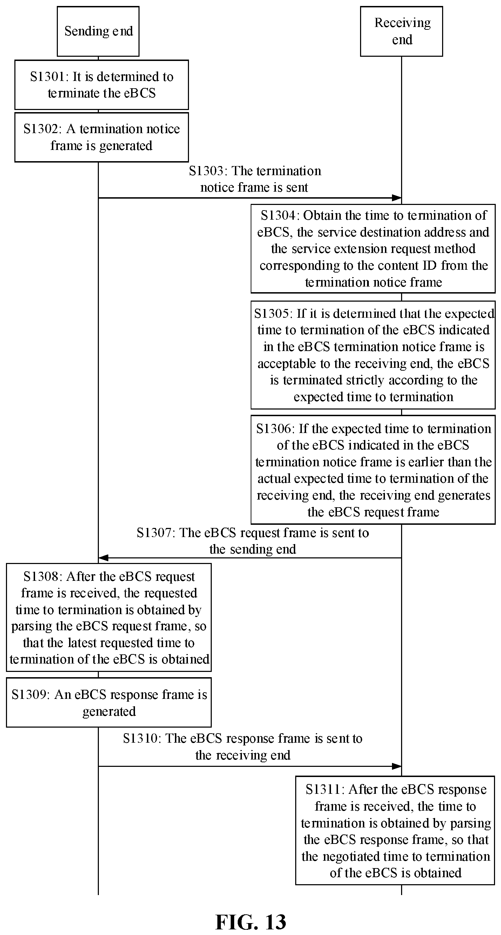

For the negotiation of the termination notice process of the eBCS that needs registration and association, specific timing diagram of the negotiation is illustrated in FIG. 13.

In an operation S1301, the sending end determines to terminate the eBCS.

Optionally, the termination of the eBCS includes a case that a Media Access Control (MAC) broadcast is terminated and an application layer still generates a data source.

In an operation S1302, the sending end generates a termination notice frame.

In an operation S1303, the ending end sends the termination notice frame to the receiving end.

In an operation S1304, the receiving end obtains the time to termination of eBCS, the service destination address and the service extension request method corresponding to the content ID from the termination notice frame.

In an operation S1305, if the receiving end determines that the expected time to termination of the eBCS indicated in the eBCS termination notice frame is acceptable to the receiving end, the eBCS would be terminated strictly according to the expected time to termination.

In an operation S1306, if the expected time to termination of the eBCS indicated in the eBCS termination notice frame is earlier than the actual expected time to termination of the receiving end, the receiving end generates the eBCS request frame.

In an operation S1307, the receiving end sends the eBCS request frame to the sending end.

The eBCS request frame includes a content ID corresponding to the eBCS and a requested time to termination. Optionally, the eBCS request frame includes an eBCS request information set, and the eBCS request information set includes the requested time to termination.

In an operation S1308, after receiving the eBCS request frame, the sending end obtains the requested time to termination by parsing the eBCS request frame, so as to obtain the latest requested time to termination of the eBCS.

In an operation S1309, the sending end generates an eBCS response frame.

In operation S1310, the sending end sends the eBCS response frame to the receiving end.

The EBCS response frame includes a content ID corresponding to the eBCS, a time to termination, a service process (SP) duration and an SP interval. Optionally, the eBCS response frame includes an eBCS response information set, and the eBCS response information set includes the time to termination.

In an operation S1311, after receiving the eBCS response frame, the receiving end obtains the time to termination by parsing the eBCS response frame, so as to obtain the negotiated time to termination of the eBCS.

The present disclosure mainly solves the following two technical problems.
1. As mentioned above, in the standard 802.11bc, the STA rapidly discovers the eBCS through the ANQP request and the ANQP response, or through the eBCS request and the eBCS response. However, at present, there is no the authentication information of the eBCS in the enhanced broadcast response ANQP-element structure of the ANQP response. Likewise, there is no the authentication information of the eBCS in the eBCS response element structure of the eBCS response. Therefore, the STA cannot obtain the authentication information of the eBCS through the ANQP request/ANQP response, or through the eBCS request and the eBCS response, but has to receive the eBCS info frame before acquiring the authentication information of the eBCS, which leads to the problems of the large data authentication delay and the data loss caused by the eBCS authentication delay in the eBCS acquisition process.
2. For the eBCS that only needs registration, after the sending end sends the eBCS termination notice frame to the receiving end, if the expected time to termination of the eBCS indicated in the eBCS termination notice frame is earlier than the actual expected time to termination of the receiving end, the receiving end would request the extension of the eBCS through the ANQP request method according to the eBCS extension information indicated in the received eBCS termination notice frame. However, there is no service time to termination field in the current enhanced broadcast request ANQP-element structure. Therefore, this element structure cannot support the termination notice process of the eBCS that only needs registration.

For the above first technical problem, the present disclosure mainly adopts the following methods to solve the technical problem. The enhanced broadcast response ANQP-element structure is modified, or the enhanced broadcast request ANQP-element structure and the enhanced broadcast response ANQP-element structure are modified, or the eBCS response element structure is modified, or the eBCS request element structure and the eBCS response element structure are modified.

For the above second technical problem, the present disclosure mainly adopts the following method to solve the technical problem. The enhanced broadcast request ANQP-element structure is modified.

The technical solutions of the present disclosure would be described in detail below.

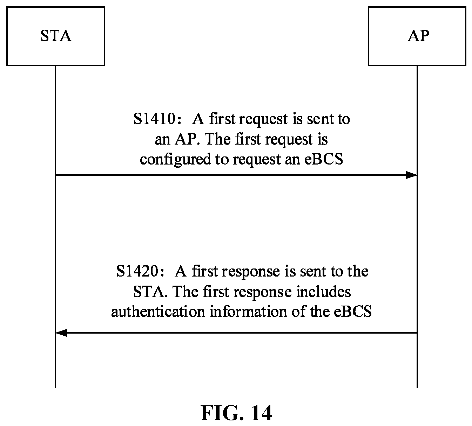

FIG. 14 is an interaction flow chart of a wireless communication method provided by an embodiment of the present disclosure. As illustrated in FIG. 14, the method includes the following operations.

In an operation S1410, a STA sends a first request to an AP, and the first request is configured to request an eBCS.

In an operation S1420, the AP sends a first response to the STA, and the first response includes authentication information of the eBCS.

Optional method 1: the eBCS is an eBCS which needs registration and does not need association, and correspondingly, the first request is an ANQP request, and the first response is an ANQP response.

Optional method 2: the eBCS is an eBCS which needs association, and correspondingly, the first request is an eBCS request, and the first response is an eBCS response.

The ANQP request in the optional method 1 is described exemplarily.

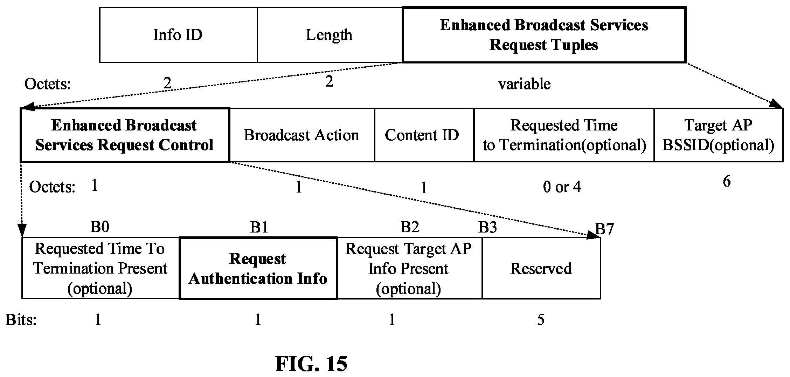

In a first example, FIG. 15 is a diagram of an enhanced broadcast request ANQP-element structure provided by an embodiment of the present disclosure. As illustrated in FIG. 15, an enhanced broadcast services request control field is added to enhanced broadcast services request tuples in the enhanced broadcast service request ANQP-element structure, and request authentication information is added in the enhanced broadcast services request control field. The request authentication information is configured to indicate whether to request for acquiring authentication information of the eBCS. Optionally, a value of the request authentication information is 1, which indicates that the STA requests a rapid acquisition of the eBCS and the STA requests the authentication information of the eBCS. The value of the request authentication information is 0, which indicates that the STA does not request the authentication information of the eBCS.

Optionally, as illustrated in FIG. 15, the enhanced broadcast services request control field may include a requested time to termination present, which is configured for a termination notice process of the STA.

Optionally, as illustrated in FIG. 15, the enhanced broadcast services request tuples may include a requested time to termination.

Optionally, as illustrated in FIG. 15, the enhanced broadcast services request control field may include a request target AP information present, and the request target AP information present is configured for a cross-AP request process of the STA, which would not be described in detail in the present solution.

Optionally, as illustrated in FIG. 15, the enhanced broadcast services request tuples may include a basic service set identifier (BSSID) of a target AP.

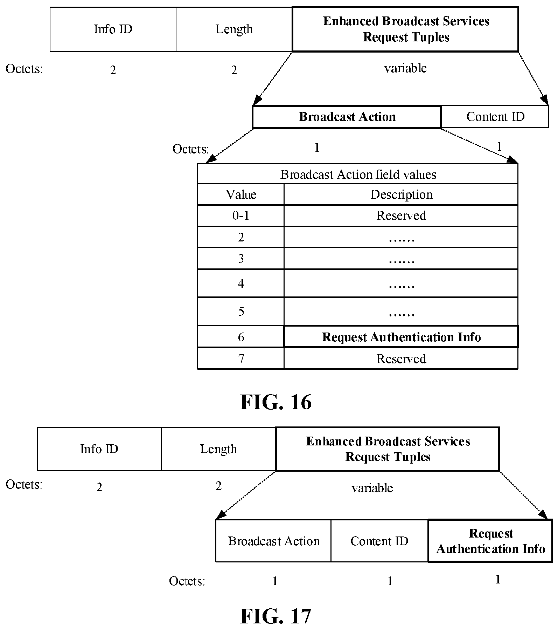

In a second example, FIG. 16 is a diagram of another enhanced broadcast request ANQP-element structure provided by an embodiment of the present disclosure. As illustrated in FIG. 16, the enhanced broadcast services request control field is not added to the enhanced broadcast request ANQP-element structure. Instead, the request authentication information is added to a reserved field of the broadcast action field.

In a third example, no field is added in the enhanced broadcast request ANQP-element structure, as illustrated in FIG. 11. By default, the ANQP response from the AP carries the authentication information of eBCS.

In the fourth example, FIG. 17 is a diagram of yet another enhanced broadcast request ANQP-element structure provided by an embodiment of the present disclosure. As illustrated in FIG. 17, the enhanced broadcast services request tuples in the enhanced broadcast request ANQP-element structure include the request authentication information.

It should be noted that the above first example to fourth example are only several examples for modifying the enhanced broadcast request ANQP-element structure, but are not limited thereto. Lengths of various fields in the enhanced broadcast request ANQP-element structure are not limited to the field lengths illustrated in FIG. 15 to FIG. 17 and FIG. 11.

The ANQP response in the optional method 1 is described exemplarily.

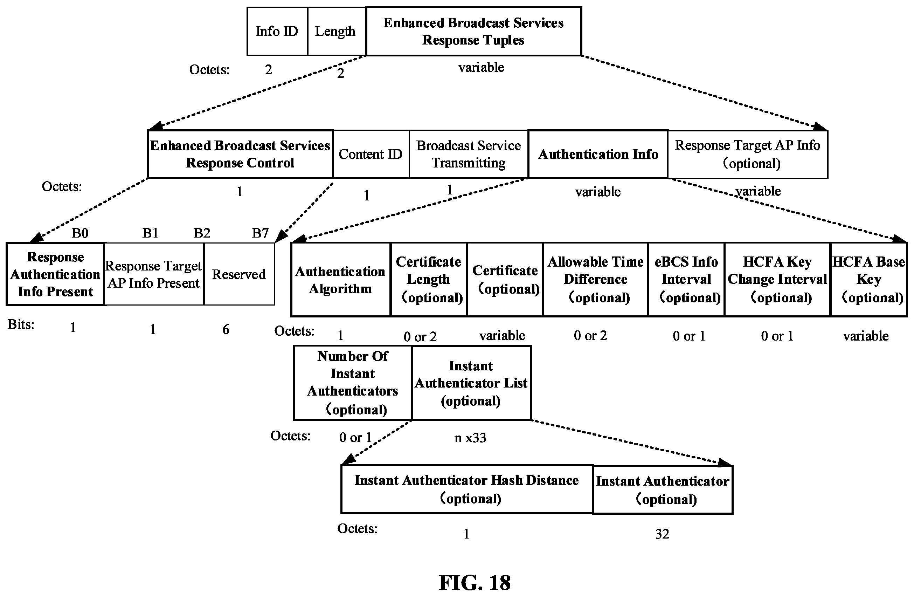

In a first example, FIG. 18 is a diagram of an enhanced broadcast response ANQP-element structure provided by an embodiment of the present disclosure. As illustrated in FIG. 18, the enhanced broadcast services response control field is added in the enhanced broadcast services response tuples of the enhanced broadcast response ANQP-element structure, and a response authentication information present is added in the enhanced broadcast services response control field. Optionally, a value of the response authentication information is 1, which indicates that the rapid acquisition of the eBCS is successfully requested by the STA and the authentication information of the eBCS is added in the enhanced broadcast services response tuples. The value of the response authentication information is 0, which indicates that the STA cannot obtain the authentication information of the eBCS, that is, the authentication information of the eBCS is not added in the enhanced broadcast response ANQP-element structure.

Optionally, the authentication information of the eBCS includes an authentication algorithm field, and the authentication algorithm field is configured to indicate an authentication algorithm for the eBCS.

Optionally, the authentication algorithm is, but is not limited to, one of: no frame authentication with mandatory Higher Layer Source Authentication (HLSA), PKFA, HCFA without instant authentication, or HCFA with the instant authentication.

Optionally, the authentication algorithm for the eBCS is illustrated in Table 1.

**Table 1 Authentication algorithm for the eBCS**

| Value | Authentication algorithm |
|---|---|
| 0 | HLSA |
| 1 | PKFA |
| 2 | HCFA without the instant authentication |
| 3 | HCFA with the instant authentication |
| 4-255 | Reserved value |

Optionally, a corresponding value of authentication algorithm is 0, which indicates that a requested eBCS authentication method is the HLSA and there is no related authentication information field. The corresponding value of the authentication algorithm is 1, which indicates that the requested eBCS authentication method is the PKFA, and the authentication information further includes an allowable time difference, a certificate length and a certificate. The corresponding value of the authentication algorithm is 2, which indicates that the requested eBCS authentication method is the HCFA without the instant authentication, and the authentication information further includes the allowable time difference, an eBCS info interval, an HCFA key change interval and an HCFA base key. The corresponding value of the authentication algorithm is 3, which indicates that the requested eBCS authentication method is the HCFA with the instant authentication, and the authentication information further includes the allowable time difference, a number of instant authenticators and an instant authenticator list. The instant authenticator list includes an instant authenticator Hash distance and an instant authenticator field.

It should be noted that the information included in the authentication information can be explained with reference to the contents of the standard 802.11bc, which would not be explained in the present disclosure.

Optionally, the enhanced broadcast response ANQP-element structure may further include at least one of a response target AP information present or a response target AP info, which are configured for a cross-AP response process of the STA and would not be described in detail in the present solution.

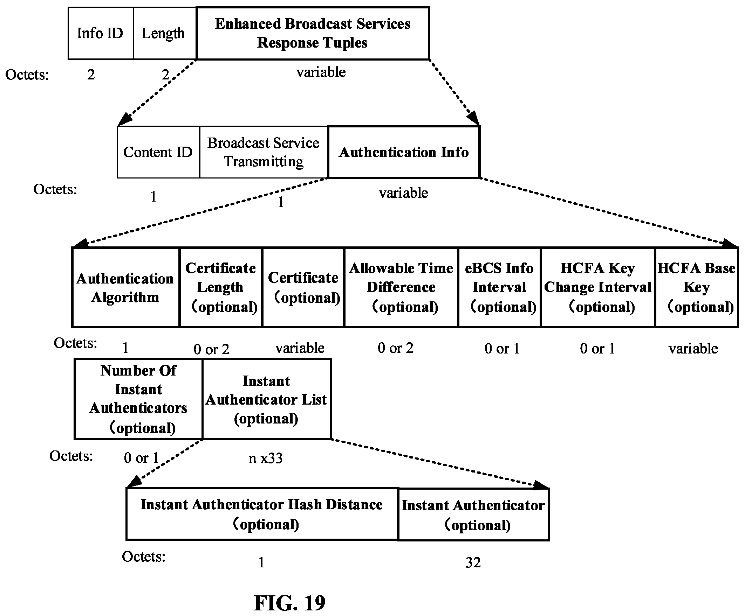

In a second example, FIG. 19 is a diagram of another enhanced broadcast response ANQP-element structure provided by an embodiment of the present disclosure. As illustrated in FIG. 19, the enhanced broadcast services response control field is not added in the enhanced broadcast services response tuples of the enhanced broadcast response ANQP-element structure. Instead, the authentication information of the eBCS is directly added in the enhanced broadcast services response tuples. For the authentication information, reference may be made to the explanation of the above first example, which would not be repeated in the present disclosure.

It should be noted that the above first example and second example are only several examples for modifying the enhanced broadcast response ANQP-element structure, but are not limited thereto. Lengths of various fields in the enhanced broadcast response ANQP-element structure are not limited to the field lengths illustrated in FIG. 18 and FIG. 19.

The eBCS request in the optional method 2 is described exemplarily.

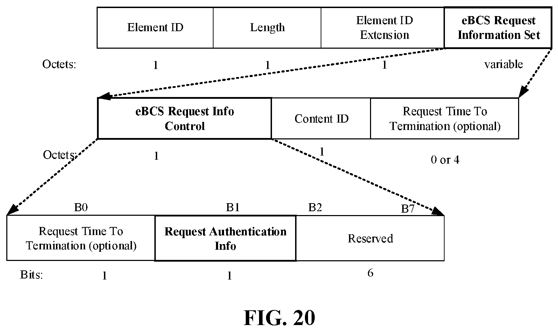

In a first example, FIG. 20 is a diagram of an eBCS request element structure provided by an embodiment of the present disclosure. As illustrated in FIG. 20, an eBCS request information set in the eBCS request element structure contains an eBCS request info control field, and the request authentication information is added in the eBCS request info control field. The request authentication information is configured to indicate whether to request for acquiring the authentication information of the eBCS. Optionally, the value of the request authentication information is 1, which indicates that the STA requests the rapid acquisition of the eBCS and the STA requests the authentication information of the eBCS. The value of the request authentication information is 0, which indicates that the STA does not request the authentication information of the eBCS.

In a second example, no field is added in the eBCS request element structure, as illustrated in FIG. 9. By default, the eBCS response from the AP carries the authentication information of eBCS.

It should be noted that the above first example and second example are only several examples of modifying the eBCS request element structure, but are not limited to thereto. Lengths of various fields in the eBCS request element structure are not limited to the field lengths illustrated in FIG. 20 and FIG. 9.

The eBCS response in the optional method 2 is described exemplarily.

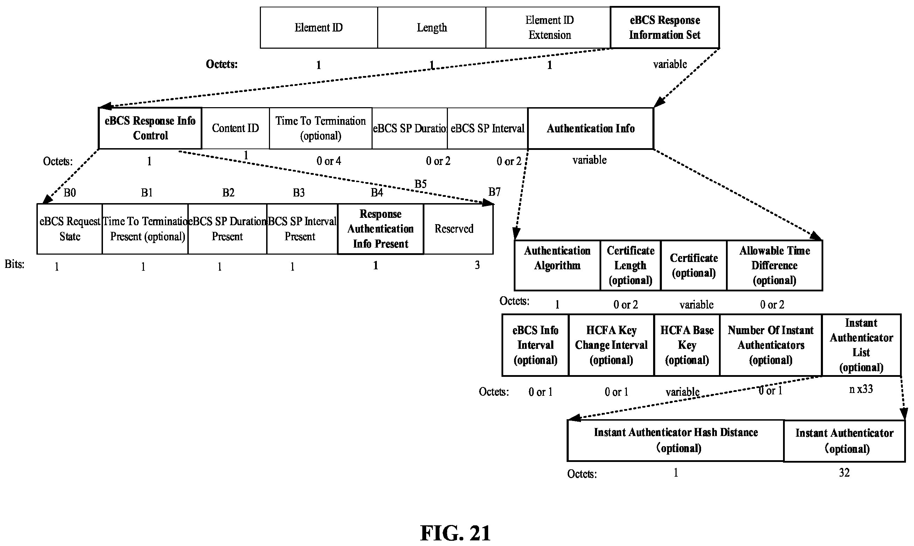

In a first example, FIG. 21 is a diagram of an eBCS response element structure provided by an embodiment of the present disclosure. As illustrated in FIG. 21, the eBCS response element structure includes an eBCS response information set, and the eBCS response information set includes an eBCS response info control field. A response authentication information present is added in the eBCS response info control field. Optionally, the value of the added response authentication information present is 1, which indicates that the rapid acquisition of the eBCS is successfully requested by the STA and the authentication information of the eBCS is added in the eBCS response information set. The value of the added response authentication information present is 0, which indicates that the rapid acquisition of the eBCS is not successfully requested by the STA, and the authentication information of the eBCS is not added in the eBCS response element structure.

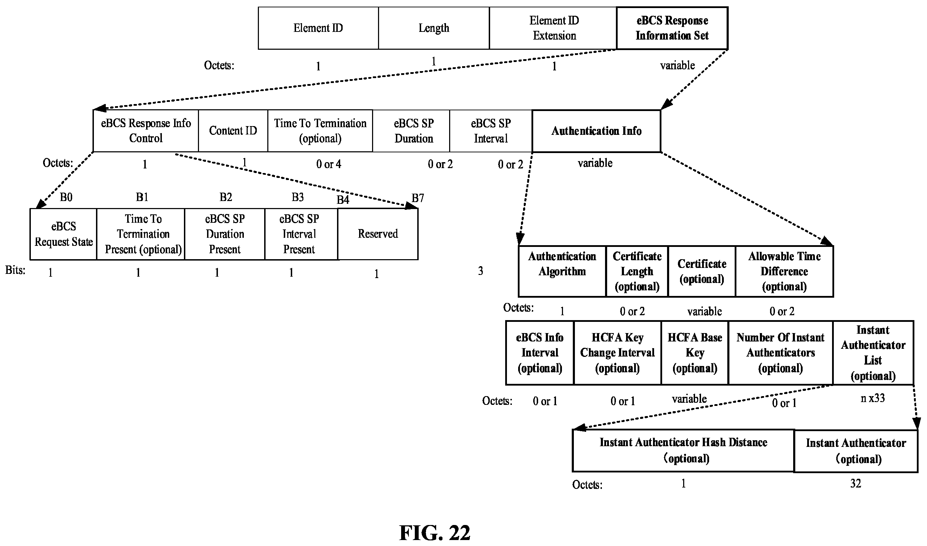

In a second example, FIG. 22 is a diagram of another eBCS response element structure provided by an embodiment of the present disclosure. As illustrated in FIG. 22, the response authentication information present is not added in the eBCS response info control field in the eBCS response element structure. By default, the eBCS response element structure from the AP directly carries the authentication information of eBCS.

It should be noted that different authentication algorithms correspond to different authentication information, which is described above and would not be repeated in the present disclosure. The information included in the authentication information can be explained with reference to the contents of the standard 802.11bc, which would not be explained in the present disclosure.

It should be noted that the above first example and second example are only several examples of modifying the eBCS response element structure, but are not limited to thereto. Lengths of various fields in the eBCS response element structure are not limited to the field lengths illustrated in FIG. 21 and FIG. 22.

To sum up, in the present disclosure, the enhanced broadcast response ANQP-element structure is modified, or the enhanced broadcast request ANQP-element structure and the enhanced broadcast response ANQP-element structure are modified, or the eBCS response element structure is modified, or the eBCS request element structure and the eBCS response element structure are modified, thereby reducing the data authentication delay in the eBCS acquisition process and mitigating the problem of data loss caused by the eBCS authentication delay.

The following would explain the rapid acquisition process of the eBCS adopting the PKFA authentication method.

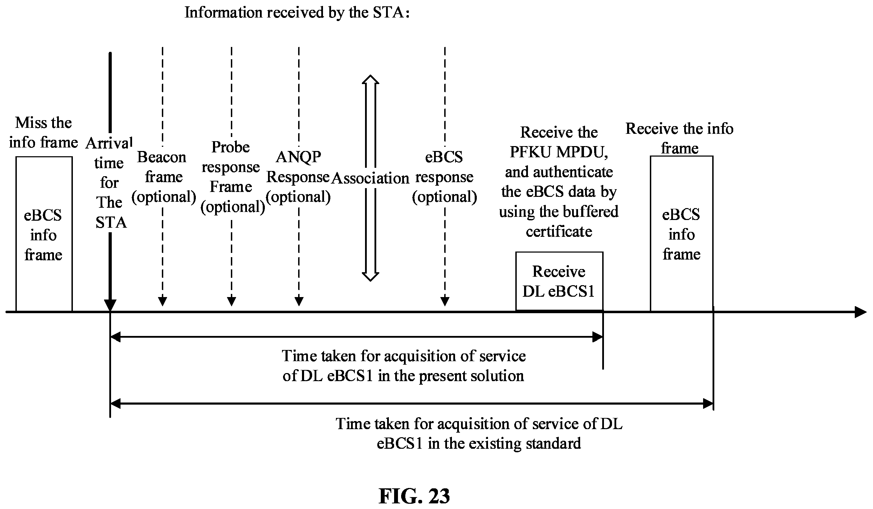

In 802.11bc, the eBCS DL supports both associated and non-associated eBCS. It is considered that the STA rapidly discovers the eBCS through the ANQP request and the ANQP response, or through the eBCS request and the eBCS response. For the PKFA authentication method, in the present disclosure, the authentication information of the eBCS is added in the ANQP response or the eBCS response, so as to realize the rapid acquisition of the eBCS for the PKFA authentication. FIG. 23 is a timing diagram of the rapid acquisition of the eBCS in the PKFA method provided by an embodiment of the present disclosure, and the specific processes are as follows.
(1) In the scanning phase, the STA joins the existing communication network by receiving a beacon frame or a probe response frame at the time point illustrated in FIG. 23. Because the transmission period of eBCS info frame is large and the transmission interval is TBTTs, it is assumed that the STA at this time misses the first eBCS info frame.
(2) The STA requests the rapid acquisition of the required service content through the ANQP request or the eBCS request according to whether the association is needed or not. For the eBCS that needs registration and does not need association, the STA achieves the rapid acquisition of the eBCS through the ANQP request and ANQP response, so as to obtain the sending time of a PKFA MPDU and the authentication information. For the eBCS that needs association, the STA achieves the rapid acquisition of the eBCS through the eBCS request and the eBCS response after the association, so as to obtain the sending time of the PKFA MPDU and the authentication information.
(3) When the STA receives the ANQP response or the eBCS response, the STA obtains the sending time of the PKFA MPDU and the authentication information, and buffers the authentication information.
(4) Finally, the STA receives the PKFA MPDU at a specified time, and authenticates the integrity of the PKFA MPDU by using the buffered authentication information.

To sum up, the timing diagram of the rapid acquisition of the eBCS for the PKFA authentication is illustrated in FIG. 23. By comparing FIG. 5 and FIG. 23, it can be seen that for the PKFA authentication method, the adoption of the rapid acquisition method of the service provided by the present disclosure can save the time for the STA to obtain the eBCS on one hand, and can improve the utilization rate of the PKFA MPDU on the other hand.

The following would explain the rapid acquisition process of the eBCS adopting the HCFA authentication method.

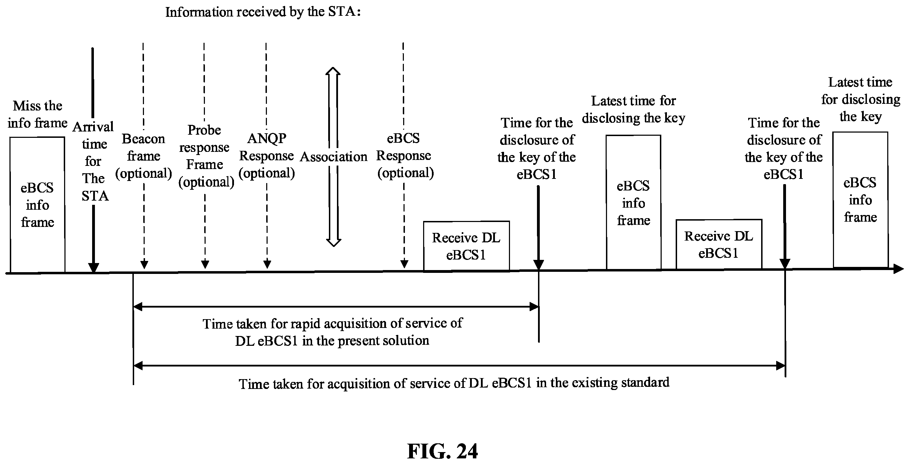

As described above, for the eBCS DL in the 802.11bc, in the HCFA authentication method, the STA has to wait for the eBCS info frame to obtain the HCFA authentication information (i.e., the authentication information of the eBCS). In the present disclosure, the HCFA authentication information is added in the ANQP response or the eBCS response, thereby realizing the rapid acquisition of the eBCS in the HCFA authentication. FIG. 24 is a timing diagram of the rapid acquisition of the eBCS in the HCFA method provided by an embodiment of the present disclosure, and the specific processes are as follows.
(1) In the scanning phase, the STA joins the existing communication network by receiving a beacon frame or a probe response frame at the time point illustrated in FIG. 24. Because the transmission period of eBCS info frame is large and the transmission interval is TBTTs, it is assumed that the STA at this time misses the first eBCS info frame.
(2) The STA requests the rapid acquisition of the required service content through the ANQP request or the eBCS request according to whether the association is needed or not. For the eBCS that needs registration and does not need association, the STA achieves the rapid acquisition of the eBCS through the ANQP request and ANQP response, so as to obtain the sending time of a HCFA MPDU and the authentication information. For the eBCS that needs association, the STA achieves the rapid acquisition of the eBCS through the eBCS request and the eBCS response after the association, so as to obtain the sending time of the HCFA MPDU and the authentication information.
(3) For the eBCS adopting the HCFA without the instant authentication, the information of three fields, (i.e., the eBCS info interval, the HCFA key change interval and the HCFA base key) are added in the ANQP response or the eBCS response. For the eBCS adopting the HCFA with the instant authentication, the information of three fields, (i.e., the number of instant authenticators, the instant authenticator Hash distance and the instant authenticator) are added in the ANQP response or eBCS response. After receiving the ANQP response or the eBCS response, the STA obtains the sending time of the HCFA MPDU and the authentication information, buffers the authentication information and waits for receiving the HCFA MPDU.
(4) The STA receives the HCFA MPDU. Since the HCFA authentication information has been obtained, the STA buffers the HCFA MPDU and waits for the disclosure of a respective key corresponding to each HCFA MPDU. The HCFA is an algorithm with the key being delayed in disclosure. Assuming that the disclosure time of HCFA MPDU key of DL eBCS1 is as illustrated in FIG. 24, the STA obtains the public key at the assumed time point and authenticates the previously buffered HCFA MPDU according to the time scale. The latest time point for disclosing the key with delay is when the second eBCS info frame in the figure is received, and the HCFA MPDU key information is included in the field of this eBCS info frame.

To sum up, the timing diagram of the rapid acquisition of the eBCS in the HCFA authentication is illustrated in FIG. 24. By comparing FIG. 6 and FIG. 24, it can be seen that for the HCFA authentication method, the adoption of the rapid acquisition method of the service provided by the present disclosure can save the time for the STA to obtain the eBCS on one hand, and can improve the utilization rate of the HCFA MPDU on the other hand.

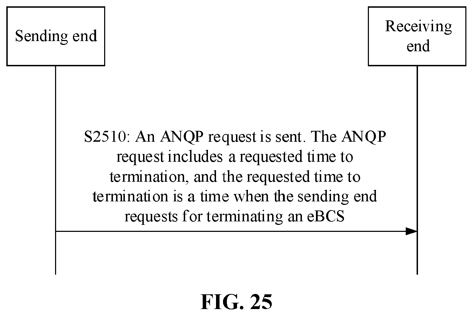

FIG. 25 is an interaction flow chart of another wireless communication method provided by an embodiment of the present disclosure. As illustrated in FIG. 25, the method includes the following operations.

In an operation S2510, a sending end sends an ANQP request to a receiving end. The ANQP request includes a requested time to termination, and the requested time to termination is a time when the sending end requests for terminating an eBCS.

Optionally, the eBCS is an eBCS which needs registration and does not need association, and the ANQP request is configured to request an extension of the eBCS.

Optionally, the sending end may be an AP and the receiving end may be an STA. Alternatively, the sending end may be an STA and the receiving end may be an AP.

The ANQP request is described exemplarily.

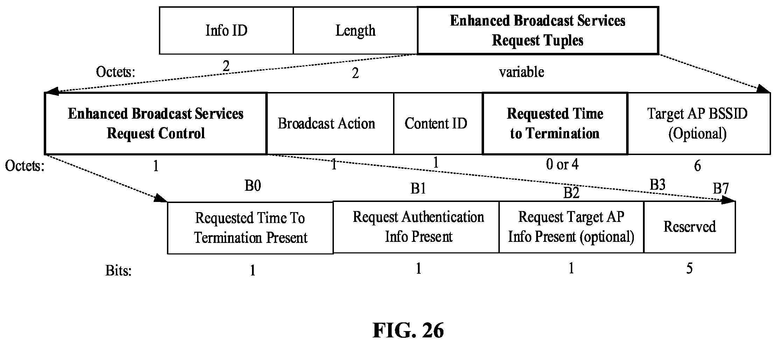

In a first example, FIG. 26 is a diagram of an enhanced broadcast request ANQP-element structure provided by the embodiment of the present disclosure. As illustrated in FIG. 26, an enhanced broadcast services request control field and a requested time to termination are added in the enhanced broadcast services request tuples of the enhanced broadcast request ANQP-element structure so that the receiving end can negotiate a time to termination of the eBCS with the sending end. A requested time to termination present is added in the enhanced broadcast services request control field. Optionally, a value of the requested time to termination present is 1, which indicates that the requested time to termination exists. The value of the requested time to termination present is 0, which indicates that the requested time to termination does not exist.

Optionally, a remaining part of the enhanced broadcast services request control field is a reserved field.

Optionally, the enhanced broadcast services request control field further includes request authentication information, and the request authentication information is configured for the rapid acquisition of eBCS to the STA.

Optionally, the enhanced broadcast services request control field further includes a request target AP information present, and the request target AP information present is configured for a cross-AP request process of the STA, which would not be described in detail in the present solution.

Optionally, as illustrated in FIG. 26, the enhanced broadcast services request tuples may include a BSSID of a target AP.

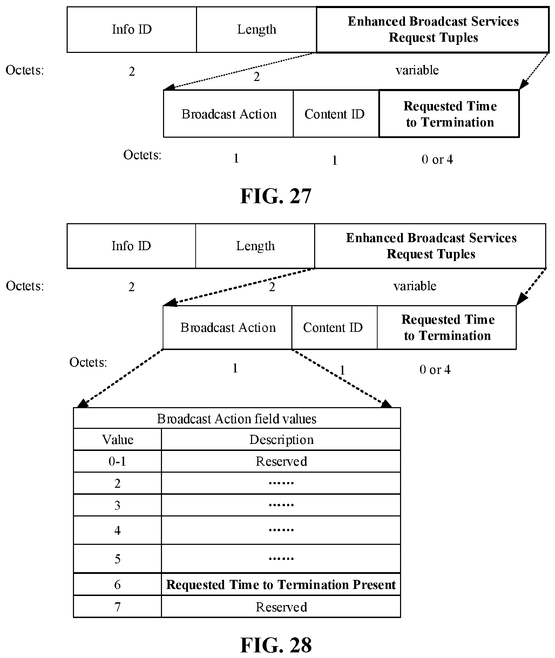

In a second example, FIG. 27 is a diagram of another enhanced broadcast request ANQP-element structure provided by an embodiment of the present disclosure. As illustrated in FIG. 27, the enhanced broadcast services request control field and the requested time to termination present are not additionally added in the enhanced broadcast request ANQP-element structure. By default, the requested time to termination is carried in the enhanced broadcast request ANQP-element structure.

In a third example, FIG. 28 is a diagram of yet another enhanced broadcast request ANQP-element structure provided by an embodiment of the present disclosure. As illustrated in FIG. 28, the enhanced broadcast services request control field is not additionally added in the enhanced broadcast request ANQP-element structure. However, the requested time to termination present is added by using other reserved fields in the enhanced broadcast request ANQP-element structure, such as a reserved field in a broadcast action field.

It should be noted that the above first example to third example are only several examples for modifying the enhanced broadcast request ANQP-element structure, but are not limited thereto. Lengths of various fields in the enhanced broadcast request ANQP-element structure are not limited to the field lengths illustrated in FIG. 26 and FIG. 28.

To sum up, in the present disclosure, the enhanced broadcast request ANQP-element structure is modified so as to support a termination notice process for an eBCS that only needs registration.

An embodiment of a negotiation solution of the termination notice process.

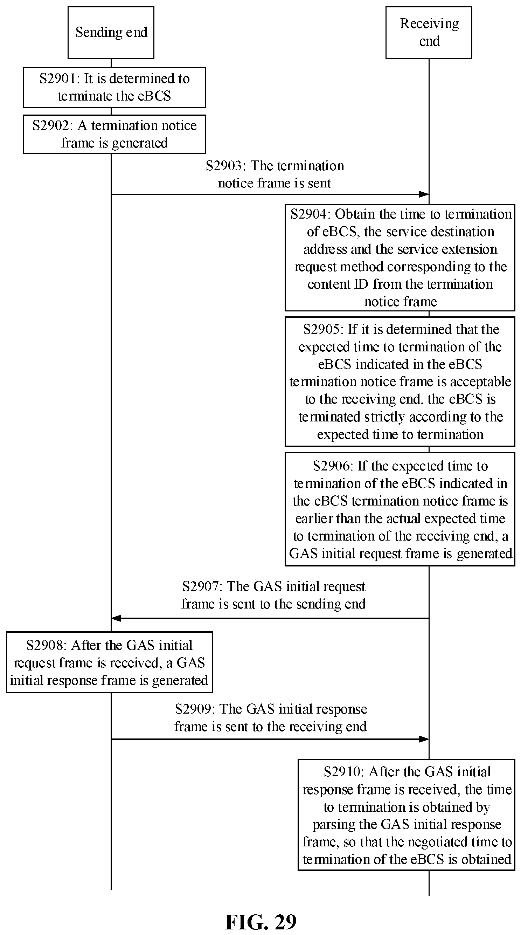

In the present disclosure, the negotiation of the termination notice process for the eBCS that only needs registration is implemented. Specifically, the specific timing diagram of the negotiation is illustrated in FIG. 29.

In an operation S2901, the sending end determines to terminate the eBCS.

Optionally, the termination of the eBCS includes a case that a MAC broadcast is terminated but an application layer still generates a data source.

In an operation S2902, the sending end generates a termination notice frame.

In an operation S2903, the sending end sends the termination notice frame to the receiving end.

In an operation S2904, the receiving end obtains the time to termination of eBCS, the service destination address and the service extension request method corresponding to the content ID from the termination notice frame.

In an operation S2905, if the receiving end determines that the expected time to termination of the eBCS indicated in the eBCS termination notice frame is acceptable to the receiving end, the eBCS would be terminated strictly according to the expected time to termination.

In an operation S2906, if the expected time to termination of the eBCS indicated in the eBCS termination notice frame is earlier than the actual expected time to termination of the receiving end, the receiving end generates a Generic Advertising Service (GAS) initial request frame.

The GAS initial request frame carries a query request field. The query request field includes an ANQP request. The ANQP request includes an enhanced broadcast request ANQP-element structure. The element structure includes a content ID, a broadcast action field and a requested time to termination.

In an operation S2907, the receiving end sends the GAS initial request frame to the sending end.

In an operation S2908, after receiving the GAS initial request frame, the sending end generates a GAS initial response frame.

The GAS initial response frame carries a query response field. The query response field includes an ANQP response. The ANQP response includes an enhanced broadcast services ANQP-element structure. The element structure may include a content ID, a time to termination, a request method, a service destination address, etc.

In an operation S2909, the sending end sends the GAS initial response frame to the receiving end.

In an operation S2910, after receiving the GAS initial response frame, the receiving end obtains the time to termination by parsing the GAS initial response frame, so as to obtain the negotiated time to termination of the eBCS.

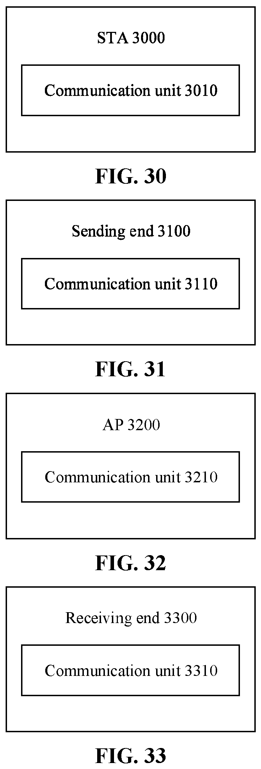

FIG. 30 illustrates a block diagram of a STA 3000 according to an embodiment of the present disclosure. As illustrated in FIG. 30, the STA 3000 includes a communication unit 3010. The communication unit 3010 is configured to send a first request to an AP and receive a first response. The first request is configured to request an eBCS, and the first response includes authentication information of the eBCS.

Optionally, the eBCS is an eBCS which needs registration and does not need association. Correspondingly, the first request is an ANQP request and the first response is an ANQP response.

Optionally, the ANQP request includes an enhanced broadcast request ANQP-element structure. The enhanced broadcast request ANQP-element structure includes enhanced broadcast services request tuples. The enhanced broadcast services request tuples include request authentication info. The request authentication info is configured to indicate whether to request the authentication information of the eBCS.

Optionally, the enhanced broadcast services request tuples include an enhanced broadcast services request control field, and the enhanced broadcast services request control field includes the request authentication info.

Optionally, the enhanced broadcast services request tuples include a broadcast action field, and a reserved field of the broadcast action field carries the request authentication info.

Optionally, the ANQP response includes a response authentication info present. The response authentication info present is configured to indicate whether the ANQP response includes the authentication information of the eBCS.

Optionally, the ANQP response includes an enhanced broadcast services response control field. The eBCS response control includes the response authentication info present.

Optionally, the eBCS is an eBCS which needs association, and correspondingly, the first request is an eBCS request, and the first response is an eBCS response.

Optionally, the eBCS request includes an eBCS request element structure. The eBCS request element structure includes an eBCS request information set, and the eBCS request information set includes request authentication info. The request authentication info is configured to indicate whether to request the authentication information of the eBCS.

Optionally, the eBCS request information set includes an eBCS request info control field, and the eBCS request info control field includes the request authentication info.

Optionally, the eBCS response includes a response authentication info present, and the response authentication info present is configured to indicate whether the eBCS response includes the authentication information of the eBCS.

Optionally, the eBCS response includes an eBCS response information set, and the eBCS response information set includes the response authentication info present.

Optionally, the eBCS response information set includes an eBCS response info control field, and the eBCS response info control field includes the response authentication info present.

Optionally, the authentication information of the eBCS includes an authentication algorithm field, and the authentication algorithm field is configured to indicate an authentication algorithm for the eBCS.

Optionally, the authentication algorithm is one of: HLSA, PKFA, HCFA without instant authentication, or HCFA with the instant authentication.

Optionally, if the authentication algorithm is PKFA, the authentication information of eBCS further includes an allowable time difference, a certificate length, and a certificate.

Optionally, if the authentication algorithm is HCFA without the instant authentication, the authentication information of the eBCS further includes an allowable time difference, an eBCS info interval, an HCFA key change interval, and an HCFA base key.

Optionally, if the authentication algorithm is HCFA with the instant authentication, the authentication information of the eBCS further includes an allowable time difference, a number of instant authenticators, and an instant authenticator list. The instant authenticator list includes an instant authenticator Hash distance and an instant authenticator field.

Optionally, in some embodiments, the above communication unit may be a communication interface or a transceiver or an input-output interface of a communication chip or of a system-on-chip.

It should be understood that the STA 3000 according to the embodiments of the present disclosure may correspond to the STA in the method embodiments, and the above and other operations and/or functions of various units of the STA 3000 are configured to respectively implement the corresponding processes performed by the STA in the method embodiments. For the sake of brevity, elaborations are omitted herein.

FIG. 31 illustrates a block diagram of a sending end 3100 according to an embodiment of the present disclosure. As illustrated in FIG. 31, the sending end 3100 includes a communication unit 3110. The communication unit 3110 is configured to send an ANQP request to a receiving end. The ANQP request includes a requested time to termination, and the requested time to termination is a time when the sending end requests for terminating an eBCS.

Optionally, the ANQP request includes an enhanced broadcast request ANQP-element structure. The enhanced broadcast request ANQP-element structure includes enhanced broadcast services request tuples. The enhanced broadcast services request tuples include the requested time to termination.

Optionally, the ANQP request includes a broadcast action field, and a reserved field of the broadcast action field carries a requested time to termination present. The requested time to termination present is configured to indicate whether the ANQP request includes the requested time to termination.

Optionally, the enhanced broadcast services request tuples include an enhanced broadcast services request control field, and the enhanced broadcast services request control field includes a requested time to termination present. The requested time to termination present is configured to indicate whether the ANQP request includes the requested time to termination.

Optionally, the eBCS is an eBCS which needs registration and does not need association, and the ANQP request is configured to request an extension of the eBCS.

Optionally, in some embodiments, the above communication unit may be a communication interface or a transceiver or an input-output interface of a communication chip or of a system-on-chip.

It should be understood that the sending end 3100 according to the embodiments of the present disclosure may correspond to the sending end in the method embodiments, and the above and other operations and/or functions of various units in the sending end 3100 are configured to respectively implement the corresponding processes performed by the sending end in the method embodiments. For the sake of brevity, elaborations are omitted herein.

FIG. 32 illustrates a block diagram of AP 3200 according to an embodiment of the present disclosure. As illustrated in FIG. 32, the AP 3200 includes a communication unit 3210. The communication unit 3210 is configured to receive a first request and send a first response to a STA. The first request is configured to request an eBCS, and the first response includes authentication information of the eBCS.

Optionally, the eBCS is an eBCS which needs registration and does not need association. Correspondingly, the first request is an ANQP request and the first response is an ANQP response.

Optionally, the ANQP request includes an enhanced broadcast request ANQP-element structure. The enhanced broadcast request ANQP-element structure includes enhanced broadcast services request tuples, and the enhanced broadcast services request tuples include request authentication info. The request authentication info is configured to indicate whether to request the authentication information of the eBCS.

Optionally, the enhanced broadcast services request tuples include an enhanced broadcast services request control field, and the enhanced broadcast services request control field includes the request authentication info.

Optionally, the enhanced broadcast services request tuples include a broadcast action field, and a reserved field of the broadcast action field carries the request authentication info.

Optionally, the ANQP response includes a response authentication info present. The response authentication info present is configured to indicate whether the ANQP response includes the authentication information the eBCS.

Optionally, the ANQP response includes an enhanced broadcast services response control field, and the enhanced broadcast services response control field includes the response authentication info present.

Optionally, the eBCS is an eBCS which needs association, and correspondingly, the first request is the eBCS request, and the first response is the eBCS response.

Optionally, the eBCS request includes an eBCS request element structure, and the eBCS request element structure includes an eBCS request information set. The eBCS request information set includes request authentication info. The request authentication info is configured to indicate whether to request the authentication information of the eBCS.

Optionally, the eBCS request information set includes an eBCS request info control field, and the eBCS request info control field includes the request authentication info.

Optionally, the eBCS response includes a response authentication info present. The response authentication info present is configured to indicate whether the eBCS response includes the authentication information of the eBCS.

Optionally, the eBCS response includes an eBCS response information set, and the eBCS response information set includes the response authentication info present.

Optionally, the eBCS response information set includes an eBCS response info control field, and the eBCS response info control field includes the response authentication information present.

Optionally, the authentication information of the eBCS includes an authentication algorithm field. The authentication algorithm field is configured to indicate an authentication algorithm for the eBCS.

Optionally, the authentication algorithm is one of: HLSA, PKFA, HCFA without instant authentication, or HCFA with the instant authentication.

Optionally, if the authentication algorithm is the PKFA, the authentication information of the eBCS further includes an allowable time difference, a certificate length, and a certificate.

Optionally, if the authentication algorithm is the HCFA without instant authentication, the authentication information of the eBCS further includes an allowable time difference, an eBCS info interval, an HCFA key change interval, and an HCFA base key.

Optionally, if the authentication algorithm is the HCFA with the instant authentication, the authentication information of the eBCS further includes an allowable time difference, a number of instant authenticators, and an instant authenticator list. The instant authenticator list includes an instant authenticator Hash distance and an instant authenticator field.

Optionally, in some embodiments, the communication unit may be a communication interface or a transceiver or an input-output interface of a communication chip or of a system-on-chip.

It should be understood that the AP 3200 according to the embodiments of the present disclosure may correspond to the AP in the method embodiments, and the above and other operations and/or functions of various units in the AP 3200 are configured to respectively implement the corresponding processes performed by the AP in the method embodiments. For the sake of brevity, elaborations are omitted herein.

FIG. 33 illustrates a block diagram of a receiving end 3300 according to an embodiment of the present disclosure. As illustrated in FIG. 33, the receiving end 3300 includes a communication unit 3310. The communication unit 3310 is configured to receive an ANQP request from a sending end. The ANQP request includes a requested time to termination, and the requested time to termination is a time when the sending end requests for terminating an eBCS.

Optionally, the ANQP request includes an enhanced broadcast request ANQP-element structure. The enhanced broadcast request ANQP-element structure includes enhanced broadcast services request tuples. The enhanced broadcast services request tuples include the requested time to termination.

Optionally, the ANQP request includes a broadcast action field, and a reserved field of the broadcast action field carries a requested time to termination present. The requested time to termination present is configured to indicate whether the ANQP request includes the requested time to termination.

Optionally, the enhanced broadcast services request tuples include an enhanced broadcast services request control field, and the enhanced broadcast services request control field includes a requested time to termination present. The requested time to termination present is configured to indicate whether the ANQP request includes the requested time to termination.

Optionally, the eBCS is an eBCS which needs registration and does not need association, and the ANQP request is configured to request an extension of the eBCS.

Optionally, in some embodiments, the above communication unit may be a communication interface or a transceiver or an input-output interface of a communication chip or of a system-on-chip.

It should be understood that the receiving end 3300 according to the embodiments of the present disclosure may correspond to the receiving end in the method embodiments, and the above and other operations and/or functions of various units in the receiving end 3300 are configured to respectively implement the corresponding processes performed by the receiving end in the method embodiments. For the sake of brevity, elaborations are omitted herein.

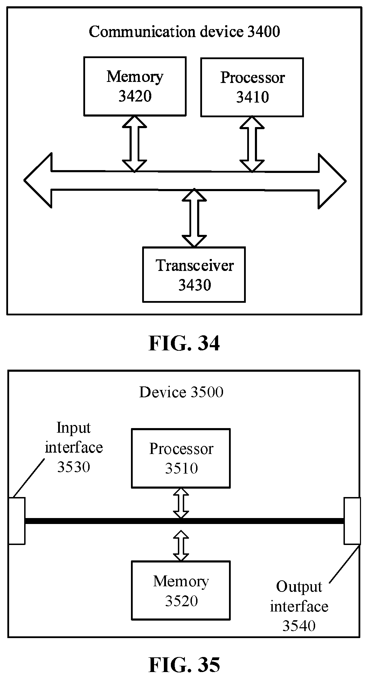

FIG. 34 is a diagram of a structure of a communication device 3400 provided by an embodiment of the present disclosure. The communication device 3400 illustrated in FIG. 34 includes a processor 3410. The processor 3410 is configured to invoke and run a computer program from a memory to implement the method in embodiments of the present disclosure.

Optionally, as illustrated in FIG. 34, the communication device 3400 further includes a memory 3420. The processor 3410 is configured to invoke and run a computer program from the memory 3420 to implement the method in embodiments of the present disclosure.

The memory 3420 may be a separate device independent of the processor 3410 or may be integrated in the processor 3410.

Optionally, as illustrated in FIG. 34, the communication device 3400 may further include a transceiver 3430. The processor 3410 may control the transceiver 3430 to communicate with other devices, and in particular may transmit information or data to or receive information or data from other devices.

The transceiver 3430 may include at least one transmitter and at least one receiver. The transceiver 3430 may further include antennas, and a number of antennas may be one or more.

Optionally, the communication device 3400 may specifically be the STA in the embodiments of the present disclosure, and the communication device 3400 may implement the corresponding processes implemented by the STA in various methods of the embodiments of the present disclosure, which would not be repeated here for the sake of brevity.

Optionally, the communication device 3400 may specifically be the AP in the embodiments of the present disclosure, and the communication device 3400 may implement corresponding processes implemented by the AP in various methods of the embodiments of the present disclosure, which would not be repeated here for the sake of brevity.

Optionally, the communication device 3400 may specifically be the sending end in the embodiments of the present disclosure, and the communication device 3400 may implement corresponding processes implemented by the sending end in various methods of the embodiments of the present disclosure, which would not be repeated here for the sake of brevity.

Optionally, the communication device 3400 may specifically be a receiving end in the embodiments of the present disclosure, and the communication device 3400 may implement corresponding processes implemented by the receiving end in various methods of the embodiments of the present disclosure, which would not be repeated here for the sake of brevity.

FIG. 35 is a diagram of a structure of a device according to an embodiment of the present disclosure. The device 3500 illustrated in FIG. 35 includes a processor 3510, and the processor 3510 is configured to invoke and run a computer program from a memory to implement the method in embodiments of the present disclosure.

Optionally, as illustrated in FIG. 35, the device 3500 may further include a memory 3520. The processor 3510 may invoke and run a computer program from the memory 3520 to implement the method in the embodiments of the present disclosure.

The memory 3520 may be a separate device independent of the processor 3510 or may be integrated in the processor 3510.

Optionally, the device 3500 may further include an input interface 3530. The processor 3510 may control the input interface 3530 to communicate with other devices or chips, and in particular to obtain information or data from other devices or chips.

Optionally, the device 3500 may further include an output interface 3540. The processor 3510 may control the output interface 3540 to communicate with other devices or chips, and in particular to output information or data to other devices or chips.

Optionally, the device can be applied to the network device in the embodiments of the present disclosure, and the device can realize the corresponding processes realized by the network device in various methods of the embodiments of the present disclosure, which would not be repeated here for the sake of brevity.

Optionally, the device can be applied to the terminal device in the embodiments of the present disclosure, and the device can realize the corresponding processes realized by the terminal device in various methods of the embodiments of the present disclosure, which would not be repeated here for the sake of brevity.

Optionally, the device mentioned in the embodiments of the present disclosure may also be a chip. For example, it can be a system level ship, a system chip, a chip system or a system-on-chip.

It should be understood that the processor in the embodiments of the present disclosure may be an integrated circuit chip having signal processing capability. In implementation, the various operations of the above method embodiments may be accomplished by integrated logic circuit of hardware or instructions in the form of software in a processor. The processor may be a general purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The methods, operations and logic block diagrams disclosed in embodiments of the present disclosure may be implemented or performed. The general purpose processor may be a microprocessor or the processor may be any conventional processor or the like. The operations of the method disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memory.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, etc. That is, the memory in embodiments of the present disclosure is intended to include but not be limited to these and any other suitable types of memory.

Embodiments of the present disclosure also provide a computer-readable storage medium for storing a computer program.

Optionally, the computer-readable storage medium can be applied to the STA, the AP, the sending end or the receiving end in the embodiments of the present disclosure, and the computer program enables the computer to execute the corresponding processes implemented by the STA, the AP, the sending end or the receiving end in various methods of the embodiments of the present disclosure, which would not be repeated here for the sake of brevity.

Embodiments of the present disclosure also provide a computer program product including computer program instructions.

Optionally, the computer program product may be applied to the STA, the AP, the sending end or the receiving end in the embodiments of the present disclosure, and the computer program instructions enable the computer to execute the corresponding processes implemented by the STA, the AP, the sending end or the receiving end in various methods of the embodiments of the present disclosure, which would not be repeated here for the sake of brevity.

Embodiments of the present disclosure also provide a computer program.

Optionally, the computer program may be applied to the STA, the AP, the sending end or the receiving end in the embodiments of the present disclosure. When the computer program is run on the computer, the computer executes the corresponding processes implemented by the STA, the AP, the sending end or the receiving end in various methods of the embodiments of the present disclosure, which would not be repeated here for the sake of brevity.

In the present disclosure, a unified eBCS request element and a unified eBCS response element are further provided to request and obtain an eBCS. The unified eBCS request element is valid for both associated eBCS and non-associated eBCS, and the unified eBCS response element is also valid for both the associated eBCS and the non-associated eBCS.

It should be understood that the eBCS request element is also described as an eBCS request element structure and the eBCS response element is also described as an eBCS response element structure, which would not be limited herein.

The unified eBCS request method would be described in detail below.

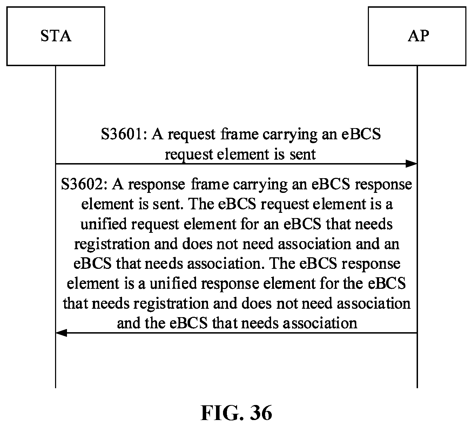

FIG. 36 is an interaction flow chart of another wireless communication method provided by an embodiment of the present disclosure. As illustrated in FIG. 36, the method includes the following operations.

In an operation S3601, an STA sends a request frame to an AP, and the request frame carries an eBCS request element.

In an operation S3602, the AP sends a response frame to the STA, and the response frame carries an eBCS response element. The eBCS request element is a unified request element for an eBCS that needs registration and does not need association and an eBCS that needs association, and the eBCS response element is a unified response element for the eBCS that needs registration and does not need association and the eBCS that needs association.

The eBCS request element is the unified request element for the eBCS that needs registration and does not need association and the eBCS that needs association, which may refer to that the eBCS request element is applicable to both the eBCS that needs registration and does not need association and the eBCS that needs association. Similarly, the eBCS response element is the unified response element for the eBCS that needs registration and does not need association and the eBCS that needs association, which may refer to that the eBCS response element is applicable to both the eBCS that needs registration and does not need association, and the eBCS that needs association.

For convenience, the eBCS request element is referred to below as a unified eBCS request element and the eBCS response element is referred to as a unified eBCS response element. The unified eBCS request element may also be directly referred to as the eBCS request element, and the unified eBCS response element may also be directly referred to as the eBCS response element.

Optionally, the unified eBCS request element is carried in a GAS initial request frame for the eBCS that needs registration and does not need association, that is, the request frame carrying the eBCS request element is the GAS initial request frame. For example, Table 2 illustrates an example that the unified eBCS request element is carried in the GAS initial request frame, but is not limited to this:

**Table 2 Action Field Format of the GAS Initial Request Frame**

| Order | Information |
|---|---|
| 0 | Category |
| 1 | Public Action |
| 2 | Dialog Token |
| 3 | Advertisement Protocol Element |
| 4 | Query Request Length |
| 5 | Query Request |
| 6 | Multi-band (optional) |
| 7 | Common Advertisement Group (CAG) Number (optional) |
| 8 | GAS Extension (optional) |
| 9 | Unified eBCS request element (optional) |

Optionally, the eBCS response element is carried in a GAS initial response frame for the eBCS that needs registration and does not need association, that is, the response frame carrying the eBCS response element is the GAS initial response frame. For example, Table 3 illustrates an example that the unified eBCS response element is carried in the GAS initial response frame, but is not limited to this:

**Table 3 Action Field Format of the GAS Initial Response Frame**

| Order | Information |
|---|---|
| 0 | Category |
| 1 | Public Action |
| 2 | Dialog Token |
| 3 | Status Code |
| 4 | GAS Comeback Delay |
| 5 | Advertisement Protocol Element |
| 6 | Query Response Length |
| 7 | Query Response (optional) |
| 8 | Multi-band (optional) |
| 9 | GAS Extension (optional) |
| 10 | Unified eBCS response element (optional) |

Optionally, the unified eBCS request element is carried in the eBCS request frame for the eBCS that needs association, that is, the request frame carrying the eBCS request element is an eBCS request frame.

It should be understood that the eBCS request frame is also described as an eBCS request, which is not limited herein.

Optionally, the unified eBCS response element is carried in the eBCS response frame for the eBCS that needs association.

It should be understood that the eBCS response frame is also described as an eBCS response, which is not limited herein.

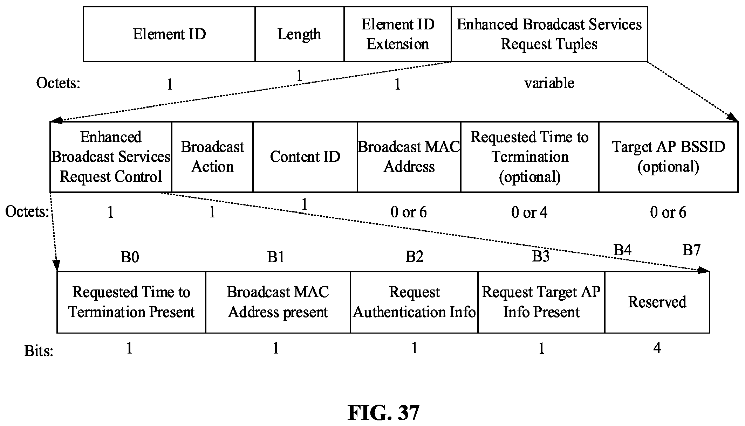

Exemplary, FIG. 37 is a diagram of a unified eBCS request element. As illustrated in FIG. 37, the unified eBCS request element may include an enhanced broadcast services request tuples, and the enhanced broadcast services request tuples include an enhanced broadcast services request control field, a broadcast action and a content ID.

It should be understood that which field of the unified eBCS request element carries the enhanced broadcast services request control field is not limited in the present disclosure.

Optionally, the enhanced broadcast services request control field includes a requested time to termination present. The requested time to termination present is configured to indicate whether the eBCS request element includes the requested time to termination. The requested time to termination is a time when the STA requests for terminating the eBCS.

For example, when a value of requested time to termination present is 1, it is indicated that the eBCS request element includes the requested time to termination. When the value of requested time to termination present is 0, it is indicated that the eBCS request element does not include the requested time to termination.

It should be understood that which field of the unified eBCS request element carries the requested time to termination present is not limited in the present disclosure.

Optionally, if the requested time to termination present is configured to indicate that the eBCS request element includes the requested time to termination, the requested time to termination may be carried in the enhanced broadcast services request tuples as illustrated in FIG. 37, which is not limited thereto.

Optionally, the enhanced broadcast services request control field includes a broadcast MAC address present. The broadcast MAC address present is configured to indicate whether the eBCS request element includes the broadcast MAC address. The broadcast MAC address is the MAC address of the AP.

For example, when a value of the broadcast MAC address present is 1, it is indicated that the eBCS request element includes the broadcast MAC address. When the value of the broadcast MAC address present is 0, it is indicated the eBCS request element does not include the broadcast MAC address.

It should be understood that which field of the unified eBCS request element carries the broadcast MAC address present is not limited in the present disclosure.

Optionally, if the broadcast MAC address present is configured to indicate that the eBCS request element includes the broadcast MAC address, the broadcast MAC address is carried in the enhanced broadcast services request tuples as illustrated in FIG. 37, which is not limited thereto.

Optionally, the enhanced broadcast services request control field includes request authentication information. The request authentication information is configured to indicate whether to request for acquiring authentication information of the eBCS.

For example, when a value of the request authentication information is 1, it is indicated that the authentication information of eBCS is requested. That is, rapid acquisition of the eBCS by the STA is supported. When the value of the request authentication information is 0, it is indicated that the authentication information of eBCS is not requested. That is, rapid acquisition of the eBCS by the STA is not supported.

It should be understood that which field of the unified eBCS request element carries the request authentication information is not limited in the present disclosure.

Optionally, the enhanced broadcast services request control field includes a request target AP information present. The request target AP information present is configured for a cross-AP request process of the STA.

For example, when a value of request target AP information present is 1, it is indicated that the eBCS request element includes a target AP BSSID. When the value of the request target AP information present is 0, it is indicated that the eBCS request element does not include the target AP BSSID.

It should be understood that which field of the unified eBCS request element carries the request target AP information present is not limited in the present disclosure.

Optionally, if the request target AP information present is configured to indicate that the eBCS request element includes the target AP BSSID, the target AP BSSID may be carried in the enhanced broadcast services request tuples as illustrated in FIG. 37, which is not limited thereto.

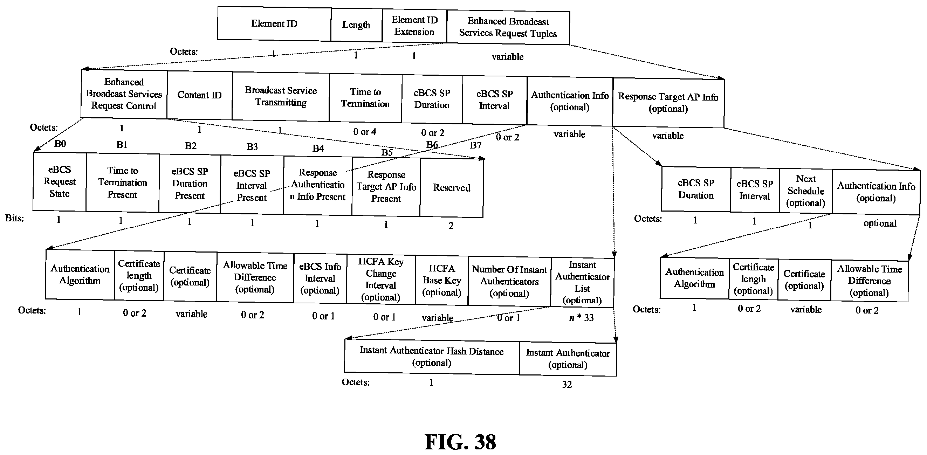

Exemplary, FIG. 38 is a diagram of a unified eBCS response element. As illustrated in FIG. 38, the unified eBCS response element includes enhanced broadcast services response tuples, and the enhanced broadcast services response tuples include an enhanced broadcast services response control field, a content ID, and a broadcast service transmitting.

It should be understood that which field of the unified eBCS response element carries the enhanced broadcast services response control field is not limited in the present disclosure.

Optionally, the enhanced broadcast services response control field includes a response authentication information present. The response authentication information present is configured to indicate whether the eBCS response element includes authentication information of the eBCS.

For example, when a value of the response authentication information present is 1, it is indicated that the eBCS response element includes the authentication information of the eBCS. When the value of the response authentication information present is 0, it is indicated that the eBCS response element does not include the authentication information of the eBCS.

It should be understood that which field of the unified eBCS response element carries the response authentication information present is not limited in the present disclosure.

Optionally, if the response authentication information present is configured to indicate that the eBCS response element includes the authentication information of the eBCS, the authentication information of the eBCS may be carried in the enhanced broadcast services response control field as illustrated in FIG. 38, which is not limited thereto.

Optionally, the enhanced broadcast services response control field includes an eBCS request state, and the eBCS request state is configured to indicate whether the eBCS request is successful.

For example, when a value of the eBCS request state is 1, it is indicated that the eBCS request is successful. When the value of the eBCS request state is 0, it is indicated that the eBCS request is not successful.

It should be understood that which field of the unified eBCS response element carries the eBCS request state present is not limited in the present disclosure.

Optionally, the enhanced broadcast services response control field includes a time to termination present. The time to termination present is configured to indicate whether the eBCS response element includes a time to termination.

For example, when a value of the time to termination present is 1, it is indicated that the eBCS response element includes the time to termination. When the value of the time to termination present is 0, it is indicated that the eBCS response element does not include the time to termination.

It should be understood that which field of the unified eBCS response element carries the time to termination present is not limited in the present disclosure.

Optionally, if the time to termination present is configured to indicate that the eBCS response element includes the time to termination, the time to termination may be carried in the enhanced broadcast services response control field as illustrated in FIG. 38, which is not limited thereto.

Optionally, the enhanced broadcast services response control field includes an eBCS SP duration present. The eBCS SP duration present is configured to indicate whether the eBCS response element includes the eBCS SP duration.

For example, when a value of the eBCS SP duration present is 1, it is indicated that the eBCS response element includes the eBCS SP duration. When the value of the eBCS SP duration present is 0, it is indicated that the eBCS response element does not include the eBCS SP duration.

It should be understood that which field of the unified eBCS response element carries the eBCS SP duration present is not limited in the present disclosure.

Optionally, if the eBCS SP duration present is configured to indicate that the eBCS response element includes the eBCS SP duration, the eBCS SP duration may be carried in the enhanced broadcast services response control field as illustrated in FIG. 38, which is not limited thereto.

Optionally, the enhanced broadcast services response control field includes an eBCS SP interval present. The eBCS SP interval present is configured to indicate whether the eBCS response element includes the eBCS SP interval.

For example, when a value of the eBCS SP interval present is 1, it is indicated that the eBCS response element includes the eBCS SP interval. When the value of the eBCS SP interval present is 0, it is indicated that the eBCS response element does not include the eBCS SP interval.

It should be understood that which field of the unified eBCS response element carries the eBCS SP interval present is not limited in the present disclosure.

Optionally, if the eBCS SP interval present is configured to indicate that the eBCS response element includes the eBCS SP interval, the eBCS SP interval may be carried in the enhanced broadcast services response control field as illustrated in FIG. 38, which is not limited thereto.

Optionally, the enhanced broadcast services response control field includes a response target AP information present. The response target AP information present is configured to indicate whether the eBCS response element includes the response target AP information.

For example, when a value of the response target AP information present is 1, it is indicated that the eBCS response element includes the response target AP information. When the value of the response target AP information present is 0, it is indicated that the eBCS response element does not include the response target AP information.

It should be understood that which field of the unified eBCS response element carries the response target AP information present is not limited in the present disclosure.

Optionally, if the response target AP information present is configured to indicate that the eBCS response element includes the response target AP i0nfo, the response target AP info may be carried in the enhanced broadcast services response control field as illustrated in FIG. 38, which is not limited thereto.

Optionally, the response target AP info includes the eBCS SP duration, the eBCS SP interval, a next schedule, and authentication information. The eBCS SP duration is configured to indicate a duration of the eBCS. The eBCS SP interval is configured to indicate an interval of the eBCS, and the next schedule is configured to indicate a next time for allocating the eBCS.

Optionally, the authentication information of the eBCS includes an authentication algorithm field, and the authentication algorithm field is configured to indicate an authentication algorithm for the eBCS.

Optionally, the authentication algorithm is, but is not limited to, one of: HLSA, PKFA, HCFA without instant authentication, or HCFA with the instant authentication.

Optionally, the authentication algorithm of eBCS is illustrated in Table 1.

Optionally, if a value corresponding to the authentication algorithm is 0, it is indicated that the requested eBCS authentication method is the HLSA, and there is no the related authentication information field. If the value corresponding to the authentication algorithm is 1, it is indicated that the requested eBCS authentication method is the PKFA, and the authentication information further includes an allowable time difference, a certificate length and a certificate. If the value corresponding to the authentication algorithm is 2, it is indicated that the requested eBCS authentication method is the HCFA without the instant authentication, and the authentication information further includes the allowable time difference, an eBCS info interval, an HCFA key change interval and an HCFA base key. If the value corresponding to the authentication algorithm is 3, it is indicated that the requested eBCS authentication method is the HCFA with the instant authentication, and the authentication information further includes the allowable time difference, a number of instant authenticators and an instant authenticator list. The instant authenticator list includes an instant authenticator Hash distance and an instant authenticator field.

It should be noted that information included in the authentication information can be explained with reference to the contents of the standard 802.11bc, which would not be explained in the present disclosure.

To sum up, in the present disclosure, the unified eBCS request element and the unified eBCS response element are further provided to request and obtain the eBCS. The unified eBCS request element is valid for both associated eBCS and non-associated eBCS, and the unified eBCS response element is also valid for both the associated eBCS and the non-associated eBCS.

As mentioned above, in the present disclosure, the unified eBCS request method is provided. However, in the related art, there are a request method only for the eBCS that needs association (hereinafter referred to as a first eBCS request method) and a request method only for the eBCS that needs registration and does not need association (hereinafter referred to as a second eBCS request method). Therefore, the STA and AP need to determine which eBCS request method to adopt before performing the request of the eBCS.

Optionally, the STA and the AP may use the same method to determine which eBCS request method to adopt. Alternatively, the STA determines which eBCS request method to adopt and indicates to the AP which eBCS request method to adopt. Alternatively, the AP determines which eBCS request method to adopt and indicates to the STA which eBCS request method to adopt.

Optionally, each eBCS request method corresponds to a unique index.

For the sake of convenience, in the present disclosure, the request method for the eBCS that needs registration and do not need association and for the eBCS that need association can be referred to as a unified eBCS request method or a target eBCS request method.

Optionally, the unified eBCS request method replaces the first eBCS request method or the second eBCS request method. That is, the first eBCS request method in the related art is replaced by the unified eBCS request method. Alternatively, the second eBCS request method in the related art is replaced by the unified eBCS request method. For example, indexes corresponding to the first eBCS request method would correspond to those of the unified eBCS request method in the present disclosure, as illustrated in Table 4.

**Table 4 eBCS Request Method**

| Index for the eBCS Request Method | Meaning | Remarks |
|---|---|---|
| 0 | No negotiation | |
| 1 | Request using Unified EBCS Request frames | eBCS request by STAs that are associated or not associated with the broadcaster |
| 2 | Request using EBCS Request ANQP-elements | EBCS request by STAs that are not associated with the broadcaster |
| 3 | Request as defined in EBCS info frame | Out of band request. The mechanism and address are indicated in the EBCS frame |
| 4-255 | Reserved | |

Optionally, as illustrated in Table 5, indexes of the unified eBCS request method are different from those of the first eBCS request method and the second eBCS request method.

**Table 5 eBCS Request Mode**

| Index for the eBCS Request Method | Meaning | Remarks |
|---|---|---|
| 0 | No negotiation | |
| 1 | Request using EBCS Requestframes | EBCS request by STAs that are associated with thebroadcaster |
| 2 | Request using EBCS Request ANQP-elements | EBCS request by STAs that are not associated with the broadcaster |
| 3 | Request as defined in EBCS info frame | Out of band request. The mechanism and address are indicated in the EBCS frame |
| 4 | Request using Unified EBCS Request frames | eBCS request by STAs that are associated or not associated with the broadcaster |
| 5-255 | Reserved | |

To sum up, in the present disclosure, the unified eBCS request method is provided. However, in the related art, there are the request method only for the eBCS that needs association and the request method only for the eBCS that needs registration and does not needs association. A certain eBCS request method to be adopted can be flexibly determined or indicated through the technical solution provided by the present disclosure.

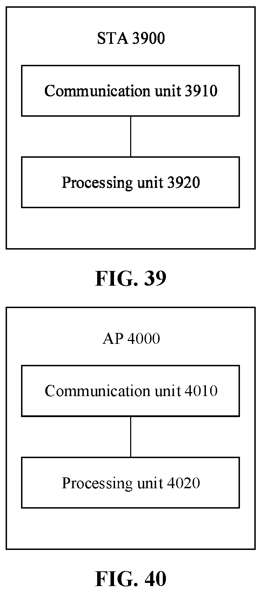

FIG. 39 illustrates a block diagram of a STA 3900 according to an embodiment of the present disclosure. The STA 3900 includes a communication unit 3910. The communication unit 3910 is configured to send a request frame carrying an eBCS request element to an AP and receive a response frame carrying an eBCS response element. The eBCS request element is a unified request element for an eBCS that needs registration and does not need association and an eBCS that needs association, and the eBCS response element is a unified response element for the eBCS that needs registration and does not need association and the eBCS that needs association.

Optionally, for the eBCS that needs registration and does not need association, the above request frame is a GAS initial request frame.

Optionally, for the eBCS that needs registration and does not need association, the above response frame is a GAS initial response frame.

Optionally, for the eBCS that needs association, the request frame is an eBCS request frame.

Optionally, for the eBCS that needs association, the response frame is an eBCS response frame.

Optionally, the eBCS request element includes a requested time to termination present. The requested time to termination present is configured to indicate whether the eBCS request element includes a requested time to termination. The requested time to termination is a time when the STA requests for terminating an eBCS.

Optionally, the eBCS request element includes an enhanced broadcast services request control field, and the enhanced broadcast services request control field carries the requested time to termination present.

Optionally, the eBCS request element includes the requested time to termination.

Optionally, the eBCS request element includes enhanced broadcast services request tuples, and the enhanced broadcast services request tuples include the requested time to termination.

Optionally, the eBCS request element includes request authentication info. The request authentication info is configured to indicate whether to request the authentication information of the eBCS.

Optionally, the eBCS request element includes an enhanced broadcast services request control field, and the enhanced broadcast services request control field carries the request authentication info.

Optionally, the eBCS request element includes the enhanced broadcast services request tuples, and the enhanced broadcast services request tuples include the enhanced broadcast services request control field.

Optionally, the eBCS response element includes a response authentication info present. The response authentication info present is configured to indicate whether the eBCS response element includes the authentication information of the eBCS.

Optionally, the eBCS response element includes an enhanced broadcast services response control field, and the enhanced broadcast services response control field includes the response authentication info present.

Optionally, the eBCS response element includes enhanced broadcast services response tuples, and the enhanced broadcast services response tuples include the enhanced broadcast services response control field.

Optionally, the eBCS response element includes the authentication information of the eBCS.

Optionally, the eBCS response element includes the enhanced broadcast services response tuples, and the enhanced broadcast services response tuples includes the authentication information of the eBCS.

Optionally, the authentication information of the eBCS includes an authentication algorithm field, and the authentication algorithm field is configured to indicate an authentication algorithm for the eBCS.

Optionally, the authentication algorithm is one of: HLSA, PKFA, HCFA without instant authentication, or HCFA with the instant authentication.

Optionally, if the authentication algorithm is the PKFA, the authentication information of the eBCS further includes an allowable time difference, a certificate length, and a certificate.

Optionally, if the authentication algorithm is HCFA without the instant authentication, the authentication information of the eBCS further includes the allowable time difference, an eBCS info interval, an HCFA key change interval, and an HCFA base key.

Optionally, if the authentication algorithm is HCFA with the instant authentication, the authentication information of the eBCS further includes the allowable time difference, a number of instant authenticators, and an instant authenticator list. The instant authenticator list includes an instant authenticator Hash distance and an instant authenticator field.

Optionally, the STA 3900 includes a processing unit 3920, and the processing unit 3920 is configured to determine to request the eBCS by adopting a target eBCS request method. The target eBCS request method is a unified eBCS request method for the eBCS that needs registration and does not need association and the eBCS that needs association.

Optionally, the target eBCS request method corresponds to a unique index.

Optionally, the target eBCS request method replaces the first eBCS request method or the second eBCS request method. The first eBCS request method is only for the eBCS that needs association, and the second eBCS request method is only for the eBCS that needs registration and does not need association.

Optionally, the index of the target eBCS request method is different from indexes of the first eBCS request method and the second eBCS request method. The first eBCS request method is only for the eBCS that needs association, and the second eBCS request method is only for the eBCS that needs registration and does not need association.

Optionally, in some embodiments, the communication unit may be a communication interface or a transceiver or an input-output interface of a communication chip or of a system-on-chip. The processing unit may be one or more processors.

It should be understood that the STA 3900 according to the embodiments of the present disclosure may correspond to the STA in the method embodiments, and the above and other operations and/or functions of various units in the STA 3900 are configured to respectively implement the corresponding processes performed by the STA in the method embodiments. For the sake of brevity, elaborations are omitted herein.

FIG. 40 illustrates a block diagram of an AP 4000 according to an embodiment of the present disclosure. The AP 4000 includes a communication unit 4010. The communication unit 4010 is configured to receive a request frame carrying an eBCS request element sent by an STA, and send a response frame carrying an eBCS response element to the STA. The eBCS request element is a unified request element for an eBCS that needs registration and does not need association and an eBCS that needs association, and the eBCS response element is a unified response element for the eBCS that needs registration and does not need association and the eBCS that needs association.

Optionally, for the eBCS that needs registration and does not need association, the above request frame is a GAS initial request frame.

Optionally, for the eBCS that needs registration and does not need association, the above response frame is a GAS initial response frame.

Optionally, for the eBCS that needs association, the request frame is an eBCS request frame.

Optionally, for the eBCS that needs association, the response frame is an eBCS response frame.

Optionally, the eBCS request element includes a requested time to termination present. The requested time to termination present is configured to indicate whether the eBCS request element includes a requested time to termination. The requested time to termination is a time when the STA requests for terminating an eBCS.

Optionally, the eBCS request element includes an enhanced broadcast services request control field, and the enhanced broadcast services request control field carries the requested time to termination present.

Optionally, the eBCS request element includes the requested time to termination.

Optionally, the eBCS request element includes enhanced broadcast services request tuples, and the enhanced broadcast services request tuples include the requested time to termination.

Optionally, the eBCS request element includes request authentication info. The request authentication info is configured to indicate whether to request the authentication information of the eBCS.

Optionally, the eBCS request element includes an enhanced broadcast services request control field, and the enhanced broadcast services request control field carries the request authentication info.

Optionally, the eBCS request element includes enhanced broadcast services request tuples, and the enhanced broadcast services request tuples include the enhanced broadcast services request control field.

Optionally, the eBCS response element includes a response authentication info present. The response authentication info present is configured to indicate whether the eBCS response element includes the authentication information of the eBCS.

Optionally, the eBCS response element includes an enhanced broadcast services response control field, and the enhanced broadcast services response control field includes the response authentication info present.

Optionally, the eBCS response element includes enhanced broadcast services response tuples, and the enhanced broadcast services response tuples include the enhanced broadcast services response control field.

Optionally, the eBCS response element includes the authentication information of the eBCS.

Optionally, the eBCS response element includes the enhanced broadcast services response tuples, and the enhanced broadcast services response tuples includes the authentication information of the eBCS.

Optionally, the authentication information of the eBCS includes an authentication algorithm field, and the authentication algorithm field is configured to indicate an authentication algorithm for the eBCS.

Optionally, the authentication algorithm is one of: HLSA, PKFA, HCFA without instant authentication, or HCFA with the instant authentication.

Optionally, if the authentication algorithm is the PKFA, the authentication information of the eBCS further includes an allowable time difference, a certificate length, and a certificate.

Optionally, if the authentication algorithm is the HCFA without the instant authentication, the authentication information of the eBCS further includes the allowable time difference, an eBCS info interval, an HCFA key change interval, and an HCFA base key.

Optionally, if the authentication algorithm is HCFA with the instant authentication, the authentication information of the eBCS further includes the allowable time difference, a number of instant authenticators, and an instant authenticator list. The instant authenticator list includes an instant authenticator Hash distance and an instant authenticator field.

Optionally, the AP 4000 includes a processing unit 4020, and the processing unit 4020 is configured to determine to request the eBCS by adopting a target eBCS request method. The target eBCS request method is a unified eBCS request method for the eBCS that needs registration and does not need association and the eBCS that needs association.

Optionally, the target eBCS request method corresponds to a unique index.

Optionally, the target eBCS request method replaces the first eBCS request method or the second eBCS request method. The first eBCS request method is only for the eBCS that needs association, and the second eBCS request method is only for the eBCS that needs registration and does not need association.

Optionally, the index of the target eBCS request method is different from indexes of the first eBCS request method and the second eBCS request method. The first eBCS request method is only for the eBCS that needs association, and the second eBCS request method is only for the eBCS that needs registration and does not need association.

Optionally, in some embodiments, the communication unit may be a communication interface or a transceiver or an input-output interface of a communication chip or of a system-on-chip. The processing unit may be one or more processors.

It should be understood that the AP 4000 according to the embodiments of the present disclosure may correspond to the AP in the method embodiments, and the above and other operations and/or functions of various units in the AP 4000 are configured to respectively implement the corresponding processes performed by the AP in the method embodiments. For the sake of brevity, elaborations are omitted herein.

Those of ordinary skill in the art would appreciate that the various example units and algorithm steps described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use different methods for each particular application to implement the described functionality, but such implementation should not be considered outside the scope of the present disclosure.

Those skilled in the art would clearly appreciate that, for convenience and brevity of description, the specific operating processes of the above-described systems, devices and units may refer to the corresponding processes in the aforementioned method embodiments and would not be repeated herein.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interface, device or unit, and may be electrical, mechanical or other form.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure can be embodied in the form of a software product in essence or the part that contributes to the related art or the part of the technical solutions. The computer software product is stored in a storage medium and includes instructions that enables a computer device (which may be a personal computer, server, network device, etc.) to perform all or part of the operations of the methods described in various embodiments of the present disclosure. The aforementioned storage medium includes a U disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A wireless communication method comprising:
sending (S2510), by a sending end device, an Access Network Query Protocol, ANQP, request to a receiving end device, wherein the ANQP request comprises a requested time to termination, and the requested time to termination is a time when the sending end device requests for terminating an Enhanced Broadcast Service, eBCS,
wherein the ANQP request comprises an enhanced broadcast request ANQP-element structure, the enhanced broadcast request ANQP-element structure comprises enhanced broadcast services request tuples, and the enhanced broadcast services request tuples comprise the requested time to termination.

2. The method of claim 1, wherein the ANQP request comprises a broadcast action field, and a reserved field of the broadcast action field carries a requested time to termination present,
wherein the requested time to termination present is configured to indicate whether the ANQP request comprises the requested time to termination.

3. The method of claim 1, wherein the enhanced broadcast services request tuples comprise an enhanced broadcast services request control field, and the enhanced broadcast services request control field comprises a requested time to termination present,
wherein the requested time to termination present is configured to indicate whether the ANQP request comprises the requested time to termination.

4. The method of any one of claims 1 to 3, wherein the eBCS is an eBCS which needs registration and does not need association, and the ANQP request is configured to request an extension of the eBCS.

5. A wireless communication method comprising:
receiving, by a receiving end device, an Access Network Query Protocol, ANQP, request from a sending end device, wherein the ANQP request comprises a requested time to termination, and the requested time to termination is a time when the sending end device requests for terminating an Enhanced Broadcast Service, eBCS,
wherein the ANQP request comprises an enhanced broadcast request ANQP-element structure, the enhanced broadcast request ANQP-element structure comprises enhanced broadcast services request tuples, and the enhanced broadcast services request tuples comprise the requested time to termination.

6. The method of claim 5, wherein the ANQP request comprises a broadcast action field, and a reserved field of the broadcast action field carries a requested time to termination present,
wherein the requested time to termination present is configured to indicate whether the ANQP request comprises the requested time to termination.

7. The method of claim 5, wherein the enhanced broadcast services request tuples comprise an enhanced broadcast services request control field, and the enhanced broadcast services request control field comprises a requested time to termination present,
wherein the requested time to termination present is configured to indicate whether the ANQP request comprises the requested time to termination.

8. The method of any one of claims 5 to 7, wherein the eBCS is an eBCS which needs registration and does not need association, and the ANQP request is configured to request an extension of the eBCS.

9. A sending end device comprising a processor and a memory, wherein the memory is configured to store a computer program, and the processor is configured to invoke and run the computer program stored in the memory to perform the method of any one of claims 1 to 4.

10. A receiving end device comprising a processor and a memory, wherein the memory is configured to store a computer program, and the processor is configured to invoke and run the computer program stored in the memory to perform the method of any one of claims 5 to 8.

11. A computer-readable storage medium for storing a computer program that causes a computer to perform the method of any one of claims 1 to 4.

12. A computer-readable storage medium for storing a computer program that causes a computer to perform the method of any one of claims 5 to 8.

## Patentansprüche

1. Verfahren zur drahtlosen Kommunikation, Folgendes umfassend:
Senden (S2510) einer Zugriffsnetzabfrageprotokoll-, ANQP-, Anfrage durch ein sendendes Endgerät an ein empfangendes Endgerät, wobei die ANQP-Anfrage eine angefragte Zeit zum Beenden umfasst und die angefragte Zeit zum Beenden eine Zeit ist, wenn das sendende Endgerät das Beenden eines erweiterten Broadcast-Dienstes, eBCS, anfragt,
wobei die ANQP-Anfrage eine Erweitertes-Broadcast-Anfrage-ANQP-Elementstruktur umfasst, die Erweitertes-Broadcast-Anfrage-ANQP-Elementstruktur Anfrage-Tupel erweiterter Broadcast-Dienste umfasst und die Anfrage-Tupel der erweiterten Broadcast-Dienste die angefragte Zeit zum Beenden umfassen.

2. Verfahren nach Anspruch 1, wobei die ANQP-Anfrage ein Broadcast-Aktionsfeld umfasst und ein reserviertes Feld des Broadcast-Aktionsfeldes eine vorhandene angefragte Zeit zum Beenden mitführt,
wobei die vorhandene angefragte Zeit zum Beenden dafür konfiguriert ist anzugeben, ob die ANQP-Anfrage die angefragte Zeit zum Beenden umfasst.

3. Verfahren nach Anspruch 1, wobei die Anfrage-Tupel der erweiterten Broadcast-Dienste ein Anfragekontrollfeld der erweiterten Broadcast-Dienste umfasst und das Anfragekontrollfeld der erweiterten Broadcast-Dienste eine vorhandene angefragte Zeit zum Beenden umfasst,
wobei die vorhandene angefragte Zeit zum Beenden dafür konfiguriert ist anzugeben, ob die ANQP-Anfrage die angefragte Zeit zum Beenden umfasst.

4. Verfahren nach einem der Ansprüche 1 bis 3, wobei der eBCS ein eBCS ist, welcher der Registrierung bedarf und nicht der Assoziation, und die ANQP-Anfrage dafür konfiguriert ist, eine Verlängerung des eBCS anzufragen.

5. Verfahren zur drahtlosen Kommunikation, Folgendes umfassend:
Empfangen einer Zugriffsnetzabfrageprotokoll-, ANQP-, Anfrage durch ein empfangendes Endgerät von einem sendenden Endgerät, wobei die ANQP-Anfrage eine angefragte Zeit zum Beenden umfasst und die angefragte Zeit zum Beenden eine Zeit ist, wenn das sendende Endgerät das Beenden eines erweiterten Broadcast-Dienstes, eBCS, anfragt,
wobei die ANQP-Anfrage eine Erweitertes-Broadcast-Anfrage-ANQP-Elementstruktur umfasst, die Erweitertes-Broadcast-Anfrage-ANQP-Elementstruktur Anfrage-Tupel der erweiterten Broadcast-Dienste umfasst und die Anfrage-Tupel der erweiterten Broadcast-Dienste die angefragte Zeit zum Beenden umfassen.

6. Verfahren nach Anspruch 5, wobei die ANQP-Anfrage ein Broadcast-Aktionsfeld umfasst und ein reserviertes Feld des Broadcast-Aktionsfeldes eine vorhandene angefragte Zeit zum Beenden mitführt,
wobei die vorhandene angefragte Zeit zum Beenden dafür konfiguriert ist anzugeben, ob die ANQP-Anfrage die angefragte Zeit zum Beenden umfasst.

7. Verfahren nach Anspruch 5, wobei die Anfrage-Tupel der erweiterten Broadcast-Dienste ein Anfragekontrollfeld der erweiterten Broadcast-Dienste umfasst und das Anfragekontrollfeld der erweiterten Broadcast-Dienste eine vorhandene angefragte Zeit zum Beenden umfasst,
wobei die vorhandene angefragte Zeit zum Beenden dafür konfiguriert ist anzugeben, ob die ANQP-Anfrage die angefragte Zeit zum Beenden umfasst.

8. Verfahren nach einem der Ansprüche 5 bis 7, wobei der eBCS ein eBCS ist, welcher der Registrierung bedarf und nicht der Assoziation, und die ANQP-Anfrage dafür konfiguriert ist, eine Verlängerung des eBCS anzufragen.

9. Sendendes Endgerät, einen Prozessor und einen Speicher umfassend, wobei der Speicher dafür konfiguriert ist, ein Computerprogramm zu speichern, und der Prozessor dafür konfiguriert ist, das in dem Speicher gespeicherte Computerprogramm aufzurufen und abzuarbeiten, um das Verfahren nach einem der Ansprüche 1 bis 4 durchzuführen.

10. Empfangendes Endgerät, einen Prozessor und einen Speicher umfassend, wobei der Speicher dafür konfiguriert ist, ein Computerprogramm zu speichern, und der Prozessor dafür konfiguriert ist, das in dem Speicher gespeicherte Computerprogramm aufzurufen und abzuarbeiten, um das Verfahren nach einem der Ansprüche 5 bis 8 durchzuführen.

11. Computerlesbares Speichermedium zum Speichern eines Computerprogramms, welches einen Computer veranlasst, das Verfahren nach einem der Ansprüche 1 bis 4 durchzuführen.

12. Computerlesbares Speichermedium zum Speichern eines Computerprogramms, welches einen Computer veranlasst, das Verfahren nach einem der Ansprüche 5 bis 8 durchzuführen.

## Revendications

1. Procédé de communication sans fil, comprenant l'étape consistant à :
envoyer (S2510), par un dispositif d'extrémité d'envoi, une demande de protocole d'interrogation de réseau d'accès, ANQP, à un dispositif d'extrémité de réception, la demande d'ANQP comprenant un temps de terminaison demandé, et le temps de terminaison demandé étant un instant auquel le dispositif d'extrémité d'envoi demande la terminaison d'un service de diffusion améliorée, eBCS,
dans lequel la demande d'ANQP comprend une structure d'élément d'ANQP de demande de diffusion améliorée, la structure d'élément d'ANQP de demande de diffusion améliorée comprend des tuples de demande de services de diffusion améliorée, et les tuples de demande de services de diffusion améliorée comprennent le temps de terminaison demandé.

2. Procédé selon la revendication 1, dans lequel la demande d'ANQP comprend un champ d'action de diffusion, et un champ réservé du champ d'action de diffusion transporte un temps de terminaison demandé présent,
dans lequel le temps de terminaison demandé présent est configuré pour indiquer si la demande d'ANQP comprend le temps de terminaison demandé.

3. Procédé selon la revendication 1, dans lequel les tuples de demande de services de diffusion améliorée comprennent un champ de commande de demande de services de diffusion améliorée, et le champ de commande de demande de services de diffusion améliorée comprend un temps de terminaison demandé présent,
dans lequel le temps de terminaison demandé présent est configuré pour indiquer si la demande d'ANQP comprend le temps de terminaison demandé.

4. Procédé selon l'une quelconque des revendications 1 à 3, dans lequel l'eBCS est un eBCS nécessitant une inscription et ne nécessitant pas d'association, et la demande d'ANQP est configurée pour demander une extension de l'eBCS.

5. Procédé de communication sans fil, comprenant l'étape consistant à :
recevoir, par un dispositif d'extrémité de réception, une demande de protocole d'interrogation de réseau d'accès, ANQP, provenant d'un dispositif d'extrémité d'envoi, la demande d'ANQP comprenant un temps de terminaison demandé, et le temps de terminaison demandé étant un instant auquel le dispositif d'extrémité d'envoi demande la terminaison d'un service de diffusion améliorée, eBCS,
dans lequel la demande d'ANQP comprend une structure d'élément d'ANQP de demande de diffusion améliorée, la structure d'élément d'ANQP de demande de diffusion améliorée comprend des tuples de demande de services de diffusion améliorée, et les tuples de demande de services de diffusion améliorée comprennent le temps de terminaison demandé.

6. Procédé selon la revendication 5, dans lequel la demande d'ANQP comprend un champ d'action de diffusion, et un champ réservé du champ d'action de diffusion transporte un temps de terminaison demandé présent,
dans lequel le temps de terminaison demandé présent est configuré pour indiquer si la demande d'ANQP comprend le temps de terminaison demandé.

7. Procédé selon la revendication 5, dans lequel les tuples de demande de services de diffusion améliorée comprennent un champ de commande de demande de services de diffusion améliorée, et le champ de commande de demande de services de diffusion améliorée comprend un temps de terminaison demandé présent,
dans lequel le temps de terminaison demandé présent est configuré pour indiquer si la demande d'ANQP comprend le temps de terminaison demandé.

8. Procédé selon l'une quelconque des revendications 5 à 7, dans lequel l'eBCS est un eBCS nécessitant une inscription et ne nécessitant pas d'association, et la demande d'ANQP est configurée pour demander une extension de l'eBCS.

9. Dispositif d'extrémité d'envoi comprenant un processeur et une mémoire, dans lequel la mémoire est configurée pour stocker un programme informatique, et le processeur est configuré pour appeler et exécuter le programme informatique stocké dans la mémoire pour réaliser le procédé selon l'une quelconque des revendications 1 à 4.

10. Dispositif d'extrémité de réception comprenant un processeur et une mémoire, dans lequel la mémoire est configurée pour stocker un programme informatique, et le processeur est configuré pour appeler et exécuter le programme informatique stocké dans la mémoire pour réaliser le procédé selon l'une quelconque des revendications 5 à 8.

11. Support de stockage lisible par ordinateur servant à stocker un programme informatique amenant un ordinateur à réaliser le procédé selon l'une quelconque des revendications 1 à 4.

12. Support de stockage lisible par ordinateur servant à stocker un programme informatique amenant un ordinateur à réaliser le procédé selon l'une quelconque des revendications 5 à 8.
